(19) Europäisches Patentamt
European Patent Office
Office européen des brevets

(11) **EP 4 516 718 B1**

(12) **EUROPÄISCHE PATENTSCHRIFT**

(45) Veröffentlichungstag und Bekanntmachung des Hinweises auf die Patenterteilung:
**05.11.2025 Patentblatt 2025/45**

(21) Anmeldenummer: **24183013.2**

(22) Anmeldetag: **19.06.2024**

(51) Internationale Patentklassifikation (IPC):
**B66C 23/42** (2006.01)     **B66C 23/70** (2006.01)
**B66C 23/90** (2006.01)

(52) Gemeinsame Patentklassifikation (CPC):
**B66C 23/702; B66C 23/905**

(54) **VERFAHREN ZUR TRAGLASTÜBERWACHUNG EINES KRANS MIT ZWEI LASTAUFNAHMEMITTELN**

METHOD FOR MONITORING THE LOAD CARRYING OF A CRANE COMPRISING TWO LOAD RECEIVING MEANS

PROCÉDÉ DE SURVEILLANCE DE CHARGE DE SUPPORT D'UNE GRUE DOTÉE DE DEUX MOYENS DE RÉCEPTION DE CHARGE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **28.08.2023 DE 102023123025**

(43) Veröffentlichungstag der Anmeldung:
**05.03.2025 Patentblatt 2025/10**

(73) Patentinhaber: **Liebherr-Werk Nenzing GmbH 6710 Nenzing (AT)**

(72) Erfinder: **MIETSCHNIG, Walter 6708 Brand (AT)**

(74) Vertreter: **Laufhütte, Dieter Lorenz Seidler Gossel Rechtsanwälte Patentanwälte Partnerschaft mbB Widenmayerstraße 23 80538 München (DE)**

(56) Entgegenhaltungen:
**EP-A1- 0 731 054     JP-A- H10 279 284**

**Beschreibung**

Die vorliegende Erfindung betrifft ein Verfahren zur Traglastüberwachung eines Krans gemäß dem Oberbegriff des Anspruchs 1, einen Kran gemäß dem Oberbegriff des Anspruchs 13 sowie ein Computerprogrammprodukt gemäß Anspruch 15.

Für das Heben und Bewegen sehr großer Lasten ist es bekannt, diese gleichzeitig an mehreren Kranen anzuschlagen und in einem koordinierten Tandem- bzw. Mehrkranhub zu bewegen. Allerdings ist es bei bestimmten Krantypen ebenfalls möglich, Lasten gleichzeitig über zwei Hubseile eines einzigen Krans zu heben. Ein derartiger Zwei-Haken-Betrieb ermöglicht neben dem Heben und Bewegen einer gemeinsamen Last auch das Heben und Bewegen zweier unterschiedlicher Lasten mittels eines einzigen Krans.

Eine typische Anwendung für das Heben bzw. Bewegen einer gemeinsamen Last im Zwei-Haken-Betrieb ist das Drehen und Wenden von Objekten bzw. Lasten, wenn diese in einer anderen Lage transportiert werden als sie später in ihrer Einbauposition eingesetzt und montiert werden müssen. Dann muss die Last möglichst ohne Schrägzug angehoben und in der Luft gedreht werden. Steht auf der Baustelle kein weiterer Kran oder nur ein begrenzter Platz zur Verfügung, kann diese kontrollierte Drehung der Last durch einen einzelnen Kran im Zwei-Haken-Betrieb erfolgen.

Ein Beispiel für einen Krantyp, der einen solchen Zwei-Haken-Betrieb ermöglicht, sind fahrbare Krane mit einem wippbaren Hauptausleger und einer daran montierten Wippspitze. Der Hauptausleger besitzt einen Auslegerkopf, über den ein Hubseil geführt ist. Am Auslegerkopf ist die Wippspitze schwenkbar befestigt, welche ebenfalls einen Auslegerkopf besitzt, über den ein weiteres Hubseil geführt ist. Der Hauptausleger ist typischerweise über einen verstellbaren Abspannbock oder über einen Derrickausleger abgespannt und um seine Wippachse wippbar, während die Wippspitze über eine eigene Abspannung abgespannt und verschwenkbar ist.

Die Bereiche am Ausleger, d.h. in dem vorstehend beschriebenen Beispiel die Punkte am Hauptausleger und an der Wippspitze, an denen die Hubseile (bzw. allgemein die Lastaufnahmemittel) mit dem Ausleger verbunden sind und die jeweils wirkende Last in die Auslegerstruktur einleiten, werden im Folgenden als Lastorte bezeichnet. Die durch ein Hubseil in den Ausleger am entsprechenden Lastort eingeleitete, aktuelle Last ergibt sich zum einen aus der am Hubseil angeschlagenen, gehobenen Last (dies kann eine Einzellast sein oder bei einem gemeinsam gehobenen Objekt eine über das jeweilige Hubseil aufgenommene Teillast) und zum anderen aus dem Eigengewicht des Hubseils (wobei letzteres für die nachfolgenden Betrachtungen vernachlässigt wird).

Bei Kranen mit einem einzigen Hubseil (Ein-Haken-Betrieb) kommt standardmäßig eine Traglastüberwachung bzw. Lastmomentbegrenzung zum Einsatz, die ein Kippen des Krans oder eine Beschädigung der Krankomponenten verhindern soll. Die Traglastüberwachung vergleicht dabei typischerweise eine aktuell aufgenommene Last bei einer bestimmten Kranposition mit einem entsprechenden Grenzwert (zulässige Traglast), welcher häufig aus einer in der Steuerung hinterlegten Traglasttabelle entnommen oder in manchen Fällen über ein Modell dynamisch berechnet wird. Erreicht oder überschreitet die aktuelle Last die zulässige Traglast, so wird üblicherweise die Kranbewegung gestoppt. Bereits vor Erreichen der zulässigen Traglast kann eine entsprechende Warnung an den Kranfahrer ausgegeben werden.

Zum Beispiel offenbart JPH10279284A ein Verfahren gemäß des Oberbegriffs des Anspruchs 1 und einen Kran gemäß des Oberbegriffs des Anspruchs 13.

Das Problem bzw. die Besonderheit beim Zwei-Haken-Betrieb ist, dass eine gegebene Last am einen Lastort die maximal zulässige Traglast am anderen Lastort beeinflusst und umgekehrt. Erhöht sich beispielsweise durch eine Veränderung der Ausladung (Lastradius) oder durch eine Schwerpunktsverlagerung eine Traglastausnutzung an einem Lastort, muss die maximal zulässige Traglast am anderen Lastort reduziert werden. Eine übliche Traglastüberwachung bzw. Lastmomentbegrenzung ist daher beim Zwei-Haken-Betrieb nicht einsetzbar.

Aus diesem Grund dürfen Lasten im herkömmlichen Kranbetrieb (Ein-Haken-Betrieb) immer nur von einem der Lastaufnahmemittel, d.h. nur an einem der Lastorte gehoben werden. Das andere Lastaufnahmemittel bzw. der andere Lastort muss hierbei unbelastet sein. Nur so ist eine ausreichend genaue Lastanzeige und Traglastausnutzungsanzeige bzw. -überwachung gegeben.

Für den Zwei-Haken Betrieb gibt es derzeit noch keine sicheren und vom Steuerrechner überwachten Verfahren. Wird trotzdem mit beiden Haken an beiden Lastorten eine gemeinsame Last oder zwei Einzellasten gehoben, so erfolgt dies üblicherweise in Eigenverantwortung des Kranfahrers ohne jegliche Überwachungseinrichtung am Kran. In der Betriebsanleitungen der Krane wird daher entweder der Zwei-Haken-Betrieb verboten oder es werden bestenfalls nur Hinweise bereitgestellt, wie der Ablauf erfolgen sollte.

Der vorliegenden Erfindung liegt daher die Aufgabe zugrunde, einen traglastüberwachten Zwei-Haken-Betrieb bei Kranen zu ermöglichen.

Erfindungsgemäß wird diese Aufgabe durch ein Verfahren mit den Merkmalen des Anspruchs 1, durch einen Kran mit den Merkmalen des Anspruchs 13 und durch ein Computerprogrammprodukt mit den Merkmalen des Anspruchs 15 gelöst. Vorteilhafte Ausführungsformen der Erfindung ergeben sich aus den Unteransprüchen und der nachfolgenden Beschreibung.

Demnach wird ein Verfahren zur Traglastüberwachung eines Krans vorgeschlagen. Der mittels des erfindungsgemäßen Verfahrens überwachte Kran umfasst einen Ausleger, bei dem es sich insbesondere um einen wippbaren Ausleger handeln kann. Der Kran umfasst weiterhin zwei Lastaufnahmemittel um Heben und Bewegen einer gemeinsamen Last oder zweier Einzellasten (Zwei-Haken-Betrieb). Die Lastaufnahmemittel können insbesondere jeweils ein Hubseil und einen Lasthaken umfassen, wobei auch andere Anschlagmittel wie Ösen oder eine Traverse vorgesehen sein können.

Im überwachten Zwei-Haken-Betrieb kann jedes der beiden Lastaufnahmemittel eine Last tragen und in den Ausleger einleiten. Die Last des ersten Lastaufnahmemittels wird an einem ersten Lastort in den Ausleger eingeleitet, während die Last des zweiten Lastaufnahmemittels an einem vom ersten Lastort beabstandeten zweiten Lastort in den Ausleger eingeleitet wird. Die eingeleiteten Lasten können Teillasten einer gemeinsam gehobenen Last bzw. eines gemeinsam gehobenen Objekts oder die Lasten von einzeln gehobenen Lasten bzw. Objekten sein. (Wie bereits erwähnt, tragen die Eigengewichte der Lastaufnahmemittel ebenfalls zu den eingeleiteten Lasten bei, darauf wird im Folgenden jedoch nicht mehr explizit hingewiesen).

Da die beiden Lastorte räumlich voneinander beabstandet sind und insbesondere mit unterschiedlichen Lastradien einhergehen, gelten für sie vorzugsweise unterschiedliche zulässige Traglastbereiche bzw. maximal zulässige Traglasten. Um dies bei der Traglastüberwachung zu berücksichtigen, ist erfindungsgemäß vorgesehen, dass eine am ersten Lastort in den Ausleger aktuell eingeleitete erste Last erfasst wird und eine am zweiten Lastort in den Ausleger aktuell eingeleitete zweite Last erfasst wird. Die Erfassung kann beispielsweise über entsprechende Sensoren in Abspannsträngen des Auslegers und/oder in unterschiedlichen Auslegerköpfen des Auslegers erfolgen. Die erfassten Lasten werden der erfindungsgemäßen Traglastüberwachung zugrunde gelegt bzw. an die ausführende Steuereinheit übermittelt.

Die erfindungsgemäße Traglastüberwachung basiert auf einer Berechnungsmethode, welcher eine Reihe von lastortbezogenen Größen zugrunde gelegt werden.

Diese sind in einem speziellen Koordinatensystem definiert, in welchem entlang einer ersten Achse (z.B. der Abszisse) die beiden Lastorte festgelegt sind und in welchem eine zur ersten Achse orthogonale zweite Achse (z.B. die Ordinate) die Last repräsentiert. Die beiden Lastorte sind dabei durch zwei voneinander beabstandete Punkte bzw. Bereiche an der ersten Achse definiert. Dabei ist es insbesondere irrelevant, welcher Abstand zwischen den beiden Lastorten in deren Repräsentation entlang der ersten Achse gewählt wird, da es auf diesen Abstand insbesondere nicht ankommt. Er kann vorzugsweise beliebig gewählt sein, um die Berechnung geeignet zu vereinfachen (beispielsweise kann der Abstand gleich eins gesetzt und/oder einheitenlos sein).

In diesem Koordinatensystem ist ein erster definierter Zusammenhang zwischen einer maximalen (d.h. maximal zulässigen) Traglast am ersten Lastort und einer bei maximaler Traglastauslastung am ersten Lastort maximal noch zulässigen Traglast am zweiten Lastort definiert. Letztere soll nachfolgend auch als "verbleibende maximale Traglast" bezeichnet werden. Es ist also für den ersten Lastort eine generell maximal zulässige Traglast festgelegt, welche unabhängig von der Traglastauslastung am zweiten Lastort nicht überschritten werden darf. Entspricht die aktuelle Last am ersten Lastort dieser maximalen Traglast (= maximale Traglastauslastung), so darf die Traglast am zweiten Lastort eine definierte verbleibende maximale Traglast nicht überschreiten.

In dem genannten Koordinatensystem ist weiterhin ein zweiter definierter Zusammenhang zwischen einer maximalen (d.h. maximal zulässigen) Traglast am zweiten Lastort und einer bei maximaler Traglastauslastung am zweiten Lastort maximal noch zulässigen Traglast am ersten Lastort (nachfolgend wiederum als "verbleibende maximale Traglast" bezeichnet) definiert. Die vorherigen Ausführungen zur verbleibenden maximalen Traglast am zweiten Lastort gelten entsprechend.

Des Weiteren ist ein erster Schnittpunkt definiert, an dem die ersten und zweiten definierten Zusammenhänge gleichzeitig erfüllt sind. Insbesondere stellen die definierten Zusammenhänge funktionelle Zusammenhänge (im einfachsten Fall lineare Zusammenhänge) im Koordinatensystem dar, welche sich am ersten Schnittpunkt im Koordinatensystem schneiden. Die funktionellen Zusammenhänge können im einfachsten Fall lediglich durch zwei Punkte im Koordinatensystem (z.B. eine maximal zulässige Traglast an einem Lastort und die verbleibende maximale Traglast am anderen Lastort) definiert sein.

Die genannten, im Koordinatensystem definierten Größen können vorab berechnet bzw. festgelegt worden und in einer Steuereinheit bzw. einem Datenspeicher hinterlegt sein, beispielsweise in Form von Tabellen für unterschiedliche Auslegerstellungen, Krankonfigurationen etc. Hierfür kann beispielsweise auf bekannte Traglasttabellen für den Ein-Haken-Betrieb zurückgegriffen werden. Alternativ kann vorgesehen sein, dass die genannten Größen im Rahmen des erfindungsgemäßen Verfahrens von einer Steuereinheit berechnet werden, beispielsweise in Abhängigkeit einer aktuellen Auslegerstellung. So hängt beispielsweise die maximale Traglast am ersten Lastort im Falle einer schwenkbaren Wippspitze von deren Schwenkwinkel ab, da dieser den Lastradius definiert und bei größeren Lastradien geringere Traglasten zulässig sind.

Erfindungsgemäß wird ein dritter definierter Zusammenhang zwischen der erfassten ersten Last und der erfassten zweiten Last im definierten Koordinatensystem ermittelt. Hierbei handelt es sich insbesondere um einen funktionellen Zusammenhang im genannten Koordinatensystem (im einfachsten Fall um einen linearen Zusammenhang, welcher wiederum lediglich durch zwei Punkte im Koordinatensystem - nämlich den beiden erfassten Lasten - festgelegt sein kann).

Ferner wird ein zweiter Schnittpunkt ermittelt, an dem der dritte definierte Zusammenhang und der erste Schnittpunkt denselben Wert auf der ersten Achse besitzen. Mit anderen Worten handelt es sich um einen Schnittpunkt des dritten definierten Zusammenhangs mit einer Senkrechten auf die erste Achse durch den ersten Schnittpunkt. Bei Ausrichtung der ersten Achse als Abszisse liegt der zweite Schnittpunkt somit unterhalb, oberhalb oder auf dem ersten Schnittpunkt.

Erfindungsgemäß werden die Lagen des ersten Schnittpunkts und des ermittelten zweiten Schnittpunkts entlang der zweiten Achse (d.h. deren Lastwerte) miteinander verglichen. Ist der Lastwert des zweiten Schnittpunkts größer als der Lastwert des ersten Schnittpunkts, befindet sich der Kran in einem unzulässigen Traglastbereich und es wird automatisch eine entsprechende Maßnahme ergriffen.

Die Maßnahme kann die Ausgabe einer Warnung umfassen, beispielsweise einer akustischen und/oder optischen Warnung an den Kranfahrer, dass ein unzulässiger Traglastbereich im aktuellen Zwei-Kran-Betrieb erreicht wurde. Alternativ oder zusätzlich kann ein automatischer Eingriff in eine aktuelle Bewegung des Krans durch eine Steuereinheit erfolgen, insbesondere ein Stoppen der aktuellen Kranbewegung oder die Durchführung einer Gegen- bzw. Ausgleichsbewegung, die den Kran wieder in den zulässigen Traglastbereich führt, bei der der Lastwert des zweiten Schnittpunkts kleiner oder gleich dem Lastwert des ersten Schnittpunkts ist. Bei der Steuereinheit kann es sich um die Kransteuerung oder eine separate Steuereinheit handeln.

Das erfindungsgemäße Verfahren kann auf einer konventionellen Lastmomentbegrenzung implementiert sein, welcher die erfassten ersten und zweiten Lasten zugeführt werden und welche die oben aufgeführten, im Koordinatensystem definierten Größen (maximale Traglastwerte, verbleibende maximale Traglastwerte, erster Schnittpunkt) entweder selbst ermittelt (z.B. aus entsprechenden abgespeicherten Traglasttabellen oder über ein Modell, welches insbesondere die aktuelle Krankonfiguration und -position berücksichtigt) oder ebenfalls als Eingangsgrößen zugeführt bekommt.

Bei den genannten ersten, zweiten und dritten definierten Zusammenhängen handelt es sich vorzugsweise um mathematische Relationen unter Einbeziehung der jeweiligen Traglastwerte, insbesondere in Form von Funktionen, die die jeweiligen Traglastwerte im Koordinatensystem schneiden bzw. enthalten

Da die erste Achse die beiden Lastorte enthält und insbesondere dimensionslos ist, kommt es auf den Abstand der Lastorte auf der ersten Achse bzw. auf dazwischenliegende Werte insbesondere nicht an. Relevant für die erfindungsgemäße Berechnungsmethode sind daher vor allem die Lastwerte (d.h. die Werte auf der zweiten Achse) an den beiden Lastorten und insbesondere an den Schnittpunkten.

Der erfindungsgemäßen Berechnungsmethode liegt die Erkenntnis zugrunde, dass sich die Traglasten an den beiden Lastorten als Gesamtsystem, d.h. als Lastkombination betrachten lassen, wobei sich unterschiedliche Lastkombinationen über entsprechende mathematische Transformationen ineinander umwandeln lassen.

Eine erste extreme Lastkombination ergibt sich für den Fall, dass die Traglast am zweiten Lastort voll ausgenutzt wird (d.h. die wirkende Last entspricht der maximalen Traglast am zweiten Lastort). Dies geht mit einer bestimmten verbleibenden maximalen Traglast am ersten Lastort einher. Diese kann den Wert größer Null oder Null besitzen (d.h. es darf keine Last am ersten Lastort wirken bzw. mittels des ersten Lastaufnahmemittels gehoben werden), insbesondere wenn der erste Lastort einem größeren Lastradius entspricht als der zweite Lastort. Eine zweite extreme Lastkombination ergibt sich für den Fall, dass die Traglast am ersten Lastort voll ausgenutzt wird (d.h. die wirkende Last entspricht der maximalen Traglast am ersten Lastort). Dies geht mit einer bestimmten verbleibenden maximalen Traglast am zweiten Lastort einher. Diese kann einen Wert Null oder größer Null besitzen (d.h. es darf noch eine bestimmte Last am zweiten Lastort wirken bzw. mittels des zweiten Lastaufnahmemittels gehoben werden), insbesondere wenn der erste Lastort einem größeren Lastradius entspricht als der zweite Lastort.

Auf Grundlage des ersten Schnittpunkts lassen sich Grenzwerte für die Traglasten an den ersten und zweiten Lastorten (d.h. aktuelle maximale Traglasten) ermitteln, die zwischen den genannten Extrempositionen liegen. Diese entsprechen einer aktuellen Lastkombinationen, bei der weder am ersten noch am zweiten Lastort eine maximale Traglastausnutzung vorherrscht.

Der aus den erfassten, aktuell an den beiden Lastorten wirkenden Lasten ermittelte zweite Schnittpunkt gibt Auskunft darüber, ob die aktuelle Lastkombination einer zulässigen Lastkombination entspricht, die sich zwischen den zuvor genannten extremen Lastkombinationen befindet. Des Weiteren ermöglicht ein Vergleich der Schnittpunkte eine Aussage über die gesamte Traglastausnutzung des Krans bei der aktuellen Lastkombination.

Dadurch ist eine Traglastüberwachung bzw. Lastmomentbegrenzung bei einem Zwei-Haken-Betrieb möglich, welche ein Einhalten der maßgeblichen, gemeinsam wirkenden Traglastgrenzen des Gesamtsystems bzw. ein Ergreifen entsprechender Maßnahmen bei Erreichen eines unzulässigen Traglastbereichs sicherstellt. Dies ermöglicht einen sicheren durchgängig überwachten Zwei-Haken-Betrieb.

Ferner kann optional eine Anzeige der aktuellen Lasten und der für die aktuelle Gesamtlastsituation bzw. Lastkombination maßgeblichen Traglastgrenzen erfolgen, beispielsweise auf einer Anzeigeeinheit in einer Kranfahrerkabine des Krans.

Die Traglastüberwachung basierend auf den Lastwerten der ersten und zweiten Schnittpunkte erfolgt vorzugsweise zusätzlich zu einer Überwachung der einzelnen Lasten der jeweiligen Lastorte. Mit anderen Worten wird vorzugsweise zusätzlich ein Überschreiten der aktuell maximalen Traglast am ersten Lastort durch die erfasste erste Last und ein Überschreiten der aktuell maximalen Traglast am zweiten Lastort durch die erfasste zweite Last durch Vergleich der Werte des ersten und des zweiten Schnittpunkts überwacht, und entsprechende Maßnahmen bei einer Überschreitung ergriffen.

Optional kann eine vorausschauende Berechnung bei angenommener Fortsetzung einer aktuellen Kranbewegung vorgenommen werden. Beispielsweise können sich die vorstehend genannten, definierten Größen (maximale Traglasten, verbleibende maximale Traglasten, erster Schnittpunkt) bei einer Bewegung des Auslegers und/oder eines Lastaufnahmemittels ändern. Dadurch ändert sich auch das Verhältnis bzw. der Abstand zwischen dem ersten und dem zweiten Schnittpunkt. Darüber hinaus kann sich auch die erste und/oder die zweite Last bei einer Bewegung des Auslegers und/oder eines Lastaufnahmemittels ändern, was wiederum in einer Änderung des zweiten Schnittpunkts resultiert. Durch eine vorausschauende Berechnung bei angenommener fortgesetzter Bewegung des Auslegers und/oder eines Lastaufnahmemittels kann bereits vor Erreichen eines unzulässigen Traglastbereichs frühzeitig eine Maßnahme ergriffen werden, beispielsweise eine Warnung ausgegeben und/oder eine Kranbewegung abgebremst oder gestoppt werden.

In einer möglichen Ausführungsform ist vorgesehen, dass die bei maximaler Traglastauslastung am zweiten Lastort maximal zulässige Traglast am ersten Lastort, d.h. die verbleibende maximale Traglast am ersten Lastort, Null ist. Ist also die maximale Traglast am zweiten Lastort erreicht, darf keine Last mehr am ersten Lastort angehängt sein. Vorzugsweise ist die verbleibende maximale Traglast am zweiten Lastort größer als Null, d.h. selbst wenn am ersten Lastort die volle Traglast ausgenutzt wird, darf immer noch eine Last am zweiten Lastort angehängt sein. Das vorstehend beschriebene Verhalten ergibt sich z.B. bei einen Kran mit einem wippbaren Hauptausleger, welcher einen Auslegerkopf mit einem Hubseil und dem zweiten Lastort aufweist, und einer am Hauptausleger montierten Nadelspitze, welche einen Auslegerkopf mit einem weiteren Hubseil und dem ersten Lastort aufweist. Da der erste Lastort einen größeren Abstand zum Anlenkpunkt des Hauptauslegers bzw. einen größeren Lastradius aufweist, ist die maximale Traglast am ersten Lastort geringer als am zweiten Lastort.

In einer weiteren möglichen Ausführungsform ist vorgesehen, dass die ersten, zweiten und dritten definierten Zusammenhänge lineare Zusammenhänge sind. Dadurch vereinfacht sich die erfindungsgemäße Berechnungsmethode, da sich die ersten und zweiten Schnittpunkte insbesondere durch sich schneidende Geraden im genannten Koordinatensystem ergeben.

Die Geraden sind dabei jeweils durch zwei Punkte definiert (die Verbindungsgeraden repräsentieren die jeweiligen extremen Lastkombinationen, wobei die jeweiligen maximalen und verbleibenden maximalen Traglasten einer Lastkombination zwei Punkte darstellen, die die jeweilige Verbindungsgerade mathematisch eindeutig festlegen) und müssen in der Steuereinheit nicht zwingend als tatsächliche Funktion vorliegen. Alternativ ist es jedoch möglich, die Geraden als Funktion des Werts entlang der ersten Achsen zu definieren und für die beiden Lastorte bestimmte Werte der ersten Achse (z.B. Null und Eins) zuzuweisen. Wie bereits erwähnt, hat der Abstand der Lastorte entlang der ersten Achse keine Auswirkung auf die Lastwerte der Schnittpunkte. Dennoch können die Schnittpunkte bestimmte Werte auf der ersten Achse aufweisen und die Geraden ebenfalls als Funktionen des Werts der ersten Achse definiert sein.

Dadurch ergeben sich insbesondere folgende Vereinfachungen:
Der erste lineare Zusammenhang repräsentiert eine erste Verbindungsgerade zwischen der maximalen Traglast am ersten Lastort und der verbleibenden maximalen Traglast am zweiten Lastort im genannten Koordinatensystem. Der zweite lineare Zusammenhang entspricht analog dazu einer zweiten Verbindungsgeraden zwischen der maximalen Traglast am zweiten Lastort und der verbleibenden maximalen Traglast am ersten Lastort.

Der dritte lineare Zusammenhang entspricht hierbei einer dritten Verbindungsgeraden zwischen der erfassten ersten Last und der erfassten zweiten Last. Diese aktuelle Lastkombination wird also durch die dritte Verbindungsgerade repräsentiert, die durch die beiden erfassten Lasten (als zwei Punkte im Koordinatensystem) eindeutig festgelegt ist.

Damit ergibt sich der erste Schnittpunkt aus dem Schnittpunkt der ersten und zweiten Verbindungsgeraden im Koordinatensystem. Der zweite Schnittpunkt ist ein Schnittpunkt der dritten Verbindungsgeraden mit einer auf die erste Achse senkrecht stehenden Geraden, die durch den ersten Schnittpunkt verläuft.

Obwohl diese Zusammenhänge anhand von Verbindungsgeraden und deren Schnittpunkten erläutert wurden, sind diese natürlich durch entsprechende mathematische Zusammenhänge repräsentiert. Insbesondere existieren für die Lastwerte der ersten und zweiten Schnittpunkte entsprechende Gleichungen, welche die maximalen Traglasten und die verbleibenden maximalen Traglasten am ersten und zweiten Lastort enthalten.

Damit ist auch klar, dass der Abstand der beiden Lastorte an der ersten Achse im Koordinatensystem nicht in die Berechnung eingeht und beliebig gesetzt werden kann (solange er größer Null ist), da dieser Abstand keinen Einfluss auf die Lastwerte der Schnittpunkte und der maximalen Traglasten hat.

In einer weiteren möglichen Ausführungsform ist vorgesehen, dass für einen Hub einer gemeinsamen Last sowohl für den ersten Lastort als auch für den zweiten Lastort eine maximale Traglast definiert ist, welche beide dem Lastwert des ersten Schnittpunkts entsprechen. Dem liegt die Erkenntnis zugrunde, dass die definierten Zusammenhänge (die im einfachsten Fall Verbindungsgeraden darstellen) bei maximaler gemeinsamer Traglastausnutzung (d.h. weder am ersten noch am zweiten Lastort ist die maximale Traglast isoliert betrachtet voll ausgenutzt, aber in Kombination ist die volle gemeinsame Traglast erreicht, sodass an keinem Lastort die Last erhöht werden darf, ohne die Last am anderen Lastort zu verringern) immer durch den ersten Schnittpunkt verlaufen.

Im Falle linearer Zusammenhänge können die Lastkombination mit maximaler gemeinsamer Traglastausnutzung (= maximal zulässige Lastkombinationen) als "Wippen" angesehen werden, bei denen die für die maximal zulässige Lastkombinationen maximalen Traglasten an den beiden Lastorten, d.h. die entsprechenden Verbindungsgeraden, um den ersten Schnittpunkt "wippen". Daher muss es eine Lastkombination mit maximaler gemeinsamer Traglastausnutzung geben, bei der die durch den ersten Schnittpunkt verlaufende Verbindungsgerade parallel zur ersten Achse verläuft. In dieser Situation sind die maximalen Traglasten an beiden Lastorten (= aktuell zulässige Traglasten) gleich groß und entsprechen dem Lastwert (d.h. dem Wert auf der zweiten Achse) des ersten Schnittpunkts. Aus dem Lastwert des ersten Schnittpunkt lassen sich also direkt die gemeinsam gültigen, aktuell zulässigen Traglasten im Falle identischer Auslastungen an beiden Lastorten ablesen, welche beispielsweise als Eintrag in eine entsprechende Traglasttabelle für den Zwei-Haken-Betrieb dienen können.

Ist die erste erfasste Last oder die zweite erfasste Last größer als diese gemeinsam gültige, aktuell zulässige Traglast, liegt ein unzulässiger Traglastbereich vor und es wird eine entsprechende Maßnahme ergriffen. Die Maßnahme kann vorzugsweise die Ausgabe einer Warnung und/oder einen automatischen Eingriff in eine aktuelle Bewegung des Krans durch die Steuereinheit umfassen, wie dies weiter oben bereits beschrieben wurde.

In einer weiteren möglichen Ausführungsform ist vorgesehen, dass die erste Last durch Erfassung einer ersten Kraft in einem ersten Abspannstrang des Auslegers und die zweite Last durch Erfassung einer zweiten Kraft in einem zweiten Abspannstrang des Auslegers ermittelt wird, wobei die ersten und zweiten Kräfte vorzugsweise über an den ersten und zweiten Abspannsträngen angeordnete Sensoren erfasst und an die Steuereinheit übermittelt werden. Bei dem ersten Abspannstrang kann es sich um eine Abspannung einer verstellbaren Wippspitze handeln, welche eine Seilverstellung umfassen kann, um die Wippspitze auf- und abzuwippen. Bei dem zweiten Abspannstrang kann es sich beispielsweise um eine Abspannung eines wippbaren Hauptauslegers handeln, welche eine Seilverstellung umfassen kann, um den Hauptausleger auf- und abzuwippen.

In einer weiteren möglichen Ausführungsform ist vorgesehen, dass eine aktuell zulässige Traglast am ersten Lastort und eine aktuell zulässige Traglast am zweiten Lastort aus dem ersten Schnittpunkt und dem ermittelten zweiten Schnittpunkt berechnet werden, falls der Lastwert des zweiten Schnittpunkts kleiner als der Lastwert des ersten Schnittpunkts ist. Diese ermittelten aktuell zulässigen Traglasten stellen Traglastgrenzwerte für die aktuelle Lastkombination bzw. Lastverteilung dar. Werden diese Traglastgrenzwerte überschritten, d.h. überschreitet die erfasste erste Last die jeweils aus den Schnittpunkten ermittelte aktuell zulässige Traglast am jeweiligen Lastort, so wird automatisch eine Maßnahme ergriffen, welche vorzugsweise die Ausgabe einer Warnung und/oder einen automatischen Eingriff in eine aktuelle Bewegung des Krans durch die Steuereinheit umfasst, wie vorstehend bereits beschrieben.

In einer weiteren möglichen Ausführungsform ist vorgesehen, dass die genannten aktuell zulässigen Traglasten am ersten und am zweiten Lastort dadurch ermittelt werden, dass die Lastwerte der ersten Last und der zweiten Last jeweils mit der Differenz der Lastwerte der ersten und zweiten Schnittpunkte addiert werden. Dadurch lassen sich für die aktuelle Lastsituation im Zwei-Haken-Betrieb zuverlässig die für die aktuelle Lastaufteilung geltenden Traglastgrenzen ermitteln und auf Überschreitung überwachen.

Der Abstand des zweiten Schnittpunkts vom ersten Schnittpunkt entlang der zweiten Achse, d.h. die Lastdifferenz der beiden Schnittpunkte, ist insbesondere ein Maß für die gesamte Traglastausnutzung durch die aktuelle Lastkombination. Insbesondere kann das Verhältnis der Lastwerte eine prozentuale Traglastausnutzung repräsentieren. Hierbei geht es also nicht um die individuelle Ausnutzung der Lasten an den einzelnen Lastorten, sondern um die gesamte, d.h. kombinierte Traglastausnutzung, welche die gesamte Lastsituation an beiden Lastorten betrachtet.

In einer weiteren möglichen Ausführungsform ist vorgesehen, dass automatisch eine Maßnahme ergriffen wird, wenn die erste Last größer als die maximale Traglast am ersten Lastort ist oder wenn die zweite Last größer als die maximale Traglast am zweiten Lastort ist, wobei die Maßnahme vorzugsweise die Ausgabe einer Warnung und/oder einen Eingriff in eine aktuelle Bewegung des Krans durch die Steuereinheit umfasst, wie oben beschrieben. Es erfolgt also zusätzlich zur Überwachung der Einhaltung der für die aktuelle Lastkombination aktuell gültigen Traglastgrenzen basierend auf den beiden Schnittpunkten eine individuelle Traglastüberwachung der jeweiligen wirkenden Lasten an den beiden Lastorten. Dies kann beispielsweise in klassischer Weise wie bei einem Ein-Haken-Betrieb anhand von entsprechenden Traglasttabellen erfolgen.

Mit anderen Worten wird sichergestellt, dass auch wenn der Lastwert des zweiten Schnittpunkts kleiner oder gleich dem Lastwert des ersten Schnittpunkts ist, nicht trotzdem die maximale Traglast am ersten Lastort oder die maximale Traglast am zweiten Lastort durch die erste oder zweite Last überschritten wird.

In einer weiteren möglichen Ausführungsform ist der Kran so ausgebildet, dass der erste Lastort relativ zum zweiten Lastort bewegbar ist, insbesondere durch Bewegung eines den ersten Lastort umfassenden Teilauslegers (z.B. einer verstellbaren Wippspitze) relativ zu einem den zweiten Lastort umfassenden Hauptausleger.

Alternativ oder zusätzlich können die ersten und zweiten Lastorte entlang des Auslegers einen konstanten Abstand zueinander aufweisen (was beispielsweise der Fall ist bei einer an einem Hauptausleger montierten Wippspitze, da die jeweiligen Auslegerköpfe unabhängig vom Schwenkwinkel der Wippspitze oder vom Wippwinkel des Hauptauslegers denselben Abstand aufweisen).

In einer weiteren möglichen Ausführungsform ist vorgesehen, dass der Ausleger einen um eine horizontale Wippachse schwenkbar an einem Trägergerät des Krans gelagerten Hauptausleger mit einem zweiten Auslegerkopf und eine starr oder um eine horizontale Schwenkachse schwenkbar am Hauptausleger befestigte Auslegerspitze mit einem ersten Auslegerkopf umfasst, wobei das erste Lastaufnahmemittel über den ersten Auslegerkopf und das zweite Lastaufnahmemittel über den zweiten Auslegerkopf geführt ist. Der erste Lastort befindet sich somit am ersten Auslegerkopf und der zweite Lastort am zweiten Auslegerkopf. Bei dem Ausleger kann es sich um einen Gittermastausleger handeln. Dieser kann über einen Abspannbock oder über einen Derrickausleger abgespannt sein. Das Trägergerät kann einen drehbaren Oberwagen umfassen, an welchen der Hauptausleger angelenkt ist, wobei der Oberwagen drehbar auf einem fahrbaren Unterwagen gelagert sein kann.

In einer weiteren möglichen Ausführungsform ist vorgesehen, dass das erste Lastaufnahmemittel mittels einer ersten Hubwinde und das zweite Lastaufnahmemittel mittels einer zweiten Hubwinde verstellbar ist, wobei die Hubwinden mittels einer Steuereinheit des Krans steuerbar und/oder regelbar sind. Bei der Steuereinheit kann es sich um die das erfindungsgemäße Berechnungsverfahren durchführende Steuereinheit oder um eine separate Steuereinheit handeln. Vorzugsweise sind die beiden Lastaufnahmemittel unabhängig voneinander verstellbar.

In einer weiteren möglichen Ausführungsform ist vorgesehen, dass eine Abweichung des ersten Lastaufnahmemittels und/oder des zweiten Lastaufnahmemittels von der Vertikalen erfasst und bei einer erkannten Abweichung eine Warnung ausgegeben und/oder eine Eingabeaufforderung angezeigt und/oder durch die Steuereinheit automatisch eine Gegenmaßnahme ergriffen wird. Somit ist zusätzlich zur erfindungsgemäßen Traglastüberwachung im Zwei-Haken-Betrieb eine Schrägzugüberwachung für beide Lastaufnahmemittel implementiert, welche vorzugsweise von derselben Steuereinheit durchgeführt wird (wobei selbstverständlich auch mehrere separate Steuereinheiten vorgesehen sein können). Die genannte Gegenmaßnahme kann vorzugsweise einen Bewegungsstopp oder eine die Abweichung ausgleichende Bewegung des Auslegers (beispielsweise eines Hauptauslegers und/oder einer gegenüber dem Hauptausleger verstellbaren Wippspitze) umfassen.

Hierbei wird insbesondere sowohl die Abweichung nach vorne / hinten (d.h. parallel zur Wippebene) als auch die Abweichung nach rechts / links (d.h. seitlich bzw. senkrecht zur Wippebene) gemessen und analysiert. Wird eine Abweichung von der Vertikalen erkannt, liegt ein Schrägzug des betrachteten Lastaufnahmemittels vor (wobei meistens entweder keines der Lastaufnahmemittel oder beide Lastaufnahmemittel einen Schrägzug aufweisen), welchen es vorzugsweise auszugleichen gilt. Hierzu wird vorzugsweise mindestens ein den Ausleger oder einen Teilausleger des Auslegers betätigender Aktuator (z.B. ein Hydraulikzylinder oder eine Seilwinde einer verstellbaren Abspannverseilung) durch die Steuereinheit so gesteuert und/oder geregelt, dass die Abweichung von der Vertikalen ausgeglichen wird. Der Ausgleich der Abweichung von der Vertikalen kann durch eine Eingabe des Kranfahrers (beispielsweise nach erfolgter Eingabeaufforderung) oder vollautomatisch durch die Steuereinheit initiierbar sein.

Da, wie bereits erwähnt, in der Regel ein Schrägzug des einen Lastaufnahmemittels mit einem entsprechenden Schrägzug des anderen Lastaufnahmemittels einhergeht, genügt es im einfachsten Fall, den Schrägzug nur eines der beiden Lastaufnahmemittel zu überwachen. Selbstverständlich können auch die Schrägzüge beider Lastaufnahmemittel überwacht werden.

Dementsprechend umfasst der Kran vorzugsweise mindestens eine Messeinrichtung zur Erfassung einer Abweichung des ersten oder zweiten Lastaufnahmemittels von der Vertikalen. Es können zwei Messeinrichtung zur Erfassung des Schrägzugs beider Lastaufnahmemittel vorgesehen sein.

Die Erfindung betrifft weiterhin einen Kran mit einem Ausleger, mit zwei Lastaufnahmemitteln zum Heben einer gemeinsamen Last oder unterschiedlicher Einzellasten, wobei ein mittels einer ersten Hubwinde verstellbares erstes Lastaufnahmemittel an einem ersten Lastort und ein mittels einer zweiten Hubwinde verstellbares zweites Lastaufnahmemittel an einem vom ersten Lastort beabstandeten zweiten Lastort mit dem Ausleger verbunden ist, und mit einer Erfassungseinrichtung, mittels welcher eine in den Ausleger am ersten Lastort eingeleitete erste Last und eine in den Ausleger am zweiten Lastort eingeleitete zweite Last erfassbar sind.

Erfindungsgemäß umfasst der Kran eine Steuereinheit, welche eingerichtet ist, das erfindungsgemäße Verfahren auszuführen (d.h. die zuvor beschriebenen Schritte, die sich auf die Steuereinheit beziehen bzw.

durch diese ausführbar sind). Dabei ergeben sich dieselben Eigenschaften und Vorteile für das erfindungsgemäße Verfahren, weshalb auf eine wiederholende Beschreibung verzichtet wird. Insbesondere gelten sämtliche zuvor für das erfindungsgemäße Verfahren beschriebenen Modifikationen und optionalen Ausführungsformen auch für den erfindungsgemäßen Kran, in beliebiger Kombination.

Die Erfindung betrifft weiterhin ein entsprechendes Computerprogrammprodukt zur Ausführung des erfindungsgemäßen Verfahrens, das Befehle umfasst, die bei der Ausführung des Programms bewirken, dass die auf die Steuereinheit bezogenen Schritte des oben beschriebenen Verfahrens (in einer beliebigen Ausführungsform) von der Steuereinheit des erfindungsgemäßen Krans ausgeführt werden. Vorzugsweise kann das Computerprogrammprodukt auf herkömmlichen Kransteuerungen bzw. Lastmomentbegrenzungen betrieben werden, sodass keine Nachrüstung von Hardwarekomponenten notwendig ist. Hierbei können herkömmliche Lastmomentbegrenzungen eingebunden sein, wie oben erwähnt.

Weitere Merkmale, Einzelheiten und Vorteile der Erfindung ergeben sich aus den nachfolgend anhand der Figuren erläuterten Ausführungsbeispielen. Es zeigen:

Fig. 1:     eine seitliche Gesamtansicht eines Ausführungsbeispiels des erfindungsgemäßen Krans mit einer im Zwei-Haken-Betrieb gemeinsam gehobenen Last;

Fig. 2-5:     beispielhafte Darstellungen des Koordinatensystems und der darin definierten Größen für die erfindungsgemäße Traglastüberwachung;

Fig. 6:     eine seitliche Gesamtansicht des Krans gemäß Fig. 1 in einer Situation mit Schrägzug; und

Fig. 7:     eine vergrößerte Ansicht des ersten Auslegerkopfs des erfindungsgemäßen Krans mit einer Messeinrichtung zur Bestimmung der Vertikalität eines Lastaufnahmemittels gemäß einem Ausführungsbeispiel.

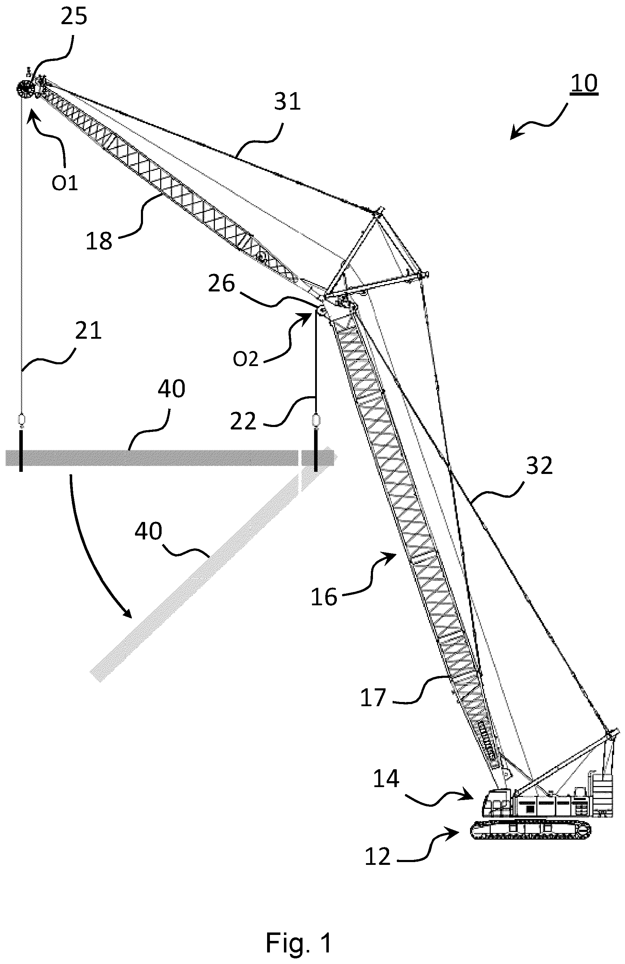

In der Figur 1 ist ein Ausführungsbeispiel des erfindungsgemäßen Krans 10 in einer seitlichen Gesamtansicht dargestellt. Bei dem Kran 10 handelt es sich um einen fahrbaren Gittermastkran, welcher einen Unterwagen 12 mit Raupenfahrwerk und einen um eine vertikale Drehachse drehbar auf dem Unterwagen 12 gelagerten Oberwagen 14 umfasst. Hier sind selbstverständlich auch andere Ausführungen denkbar, beispielsweise ein Unterwagen mit Rad- oder Schienenfahrwerk oder ein stationärer Kran mit einem an einem Turm oder einer Säule schwenkbar gelagerten Ausleger.

Bei dem hier gezeigten Ausführungsbeispiel umfasst der Kran 10 einen Ausleger 16, der einen um eine horizontale Wippachse wippbar an den Oberwagen 14 angelengten Hauptausleger 17 und eine am Hauptausleger 17 montierte und um eine horizontale Schwenkachse relativ zum Hauptausleger 17 schwenkbare Auslegerspitze in Form einer Wippspitze 18 umfasst.

Der Kran 10 besitzt zwei Lastaufnahmemittel 21, 22, welche im gezeigten Ausführungsbeispiel jeweils ein Hubseil und einen daran befestigten Lasthaken umfassen. Die Wippspitze 18 besitzt einen ersten Auslegerkopf 25, über den das Hubseil eines ersten Lastaufnahmemittels 21 geführt ist. Über das erste Lastaufnahmemittel 21 wird an einem ersten Lastort O1 am ersten Auslegerkopf 25 eine erste Last L1 in den Ausleger 16 eingeleitet. Der Hauptausleger 17 besitzt einen zweiten Auslegerkopf 26, über den das Hubseil eines zweiten Lastaufnahmemittels 22 geführt ist. Über das zweite Lastaufnahmemittel 22 wird an einem zweiten Lastort O2 am zweiten Auslegerkopf 26 eine zweite Last L2 in den Ausleger 16 eingeleitet.

Die Wippspitze 18 ist über einen ersten Abspannstrang 31 abgespannt, wobei der erste Abspannstrang 31 insbesondere zwischen zwei Abspannböcken der Wippspitze 18 eine verstellbare Abspannverseilung aufweist, über welche die Wippspitze 18 relativ zum Hauptausleger 17 verschwenkt werden kann. Das Hubseil des ersten Lastaufnahmemittels 21 ist auf einer ersten Hubwinde auf- und abwickelbar gelagert. Der Hauptausleger 17 ist über einen zweiten Abspannstrang 32 abgespannt, wobei zwischen einem am Oberwagen 14 angelenkten Abspannbock und dem Oberwagen 14 insbesondere eine verstellbare Abspannverseilung angeordnet ist, über welche der Hauptausleger 17 relativ zum Oberwagen 14 um die Wippachse auf- und abgewippt werden kann. Das Hubseil des zweiten Lastaufnahmemittels 22 ist auf einer zweiten Hubwinde auf- und abwickelbar gelagert. Die beiden Hubwinden werden vorzugsweise von einer Steuereinheit des Krans 10 gesteuert und/oder geregelt, wobei die Lastaufnahmemittel 21, 22 insbesondere unabhängig voneinander verstellbar sind.

Bei dem in der Figur 1 gezeigten Ausführungsbeispiel ist eine gemeinsame Last 40 an den beiden Lastaufnahmemitteln 21, 22 angeschlagen. Wie durch den gebogenen Pfeil angedeutet ist, kann die Last 40 durch entsprechendes Verstellen der Lastaufnahmemittel 21, 22 bewegt, z.B. gedreht werden. Bei einer gemeinsam gehobenen Last 40 ergibt sich eine Lastaufteilung auf die beiden Lastaufnahmemittel 21, 22, sodass an jedem Lastort O1, O2 eine bestimmte Teillast L1, L2 eingeleitet wird.

Beim Zwei-Haken Betrieb werden die zwei Lastaufnahmemittel 21, 22 an den zwei unterschiedlichen Lastorten O1, O2 gleichzeitig mit Last betrieben. Die Besonderheit des Zwei-Haken Betriebs liegt daran, dass eine gegebene Last am ersten Lastort O1 die maximal zulässige Traglast am zweiten Lastort O2 beeinflusst und umgekehrt. Erhöht sich z.B. durch eine Veränderung der Ausladung (Radius) oder durch eine Schwerpunktsverlagerung eine Traglastausnutzung an einem Lastort O1, O2, so muss die maximal zulässige Traglast am anderen Lastort O2, O1 reduziert werden.

Dies sei anhand des folgenden Beispiels erläutert: Liegt z.B. an ersten Lastort O1 die Maximallast (z.B. 40 t) an, darf der zweite Lastort O2 nur mit einer zugehörigen Minimallast (verbleibende maximale Traglast) belastet werden. Wird der erste Lastort O1 vollständig entlastet (0 t), darf die Last am zweiten Lastort O2 auf die maximal zulässige Traglast, d.h. auf die Maximallast am zweiten Lastort O2 (z.B. 100 t) steigen.

Die erfindungsgemäße Traglastüberwachung liefert nun eine Berechnungsmethode zur Ermittlung der gemeinsam wirkenden, aktuell zulässigen Traglasten für die einzelnen Lastorte O1, O2. Diese können zur Überwachung des Kranbetriebs, aber vorzugsweise auch zur Anzeige der aktuellen Lasten und Traglastausnutzungen und der zulässigen Lasten an einer Anzeigeeinheit (z.B. einem Kranmonitor) verwendet werden. Dies gilt unabhängig von der genauen Ausgestaltung des Krans 10. Die Berechnungsmethode wird nun anhand eines konkreten Ausführungsbeispiels erläutert, wobei das erfindungsgemäße Konzept ebenfalls unabhängig von der genauen Konfiguration des Krans 10 ist.

Basis der Berechnung bilden die herkömmlichen Kran-Traglastwerte, d.h. die maximalen Traglasten $L1_{max}$ und $L2_{max}$ am ersten Lastort O1 und am zweiten Lastort O2. Diese können beispielsweise in entsprechenden Traglasttabellen hinterlegt sein und sich abhängig von der aktuellen Auslegerstellung ändern. Ferner wird im nachfolgenden Ausführungsbeispiel davon ausgegangen, dass bei einer maximalen Traglastauslastung der Wippspitze 18 (erster Lastort O1) der Hauptausleger 17 (zweiter Lastort O2) strukturell immer noch Last aufnehmen darf, während bei einer maximalen Traglastauslastung des Hauptauslegers 17 die Wippspitze 18 (bzw. der zweite Lastort O2) keine Last mehr aufnehmen darf. Mit anderen Worten ist die bei maximaler Traglastauslastung am zweiten Lastort O2 noch maximal zulässige Traglast $L1_v$ am ersten Lastort O1 (= verbleibende maximale Traglast $L1_v$) Null, während die bei maximaler Traglastauslastung am ersten Lastort O1 noch maximal zulässige Traglast $L2_v$ am zweiten Lastort O2 (= verbleibende maximale Traglast $L2_v$) einen Wert größer Null hat, der insbesondere von der aktuellen Auslegerstellung abhängt.

Die genannten Werte werden vorliegend kontinuierlich an die aktuelle Kranstellung, insbesondere Auslegerstellung, angepasst und können aus entsprechenden Traglasttabellen entnommen oder interpoliert werden, wie dies beispielsweise aus einem herkömmlichen Ein-Haken-Betrieb bekannt sein kann.

Um nun die für einen Zwei-Haken-Betrieb, d.h. für eine bestimmte aktuell gehobene Lastenkombination (die sich aus einer gemeinsam gehobenen Last 40 oder aus zwei gehobenen Einzellasten ergeben kann) gemeinsam gültigen Traglastgrenzen zu ermitteln, werden die genannten Traglastgrenzen zu extremen Lastkombinationen verbunden und in einem Koordinatensystem definiert, welches die beiden Lastorte O1 und O2 an unterschiedlichen Positionen einer ersten Achse und die zugehörigen Lastwerte entlang einer zur ersten Achse orthogonalen zweiten Achse enthält.

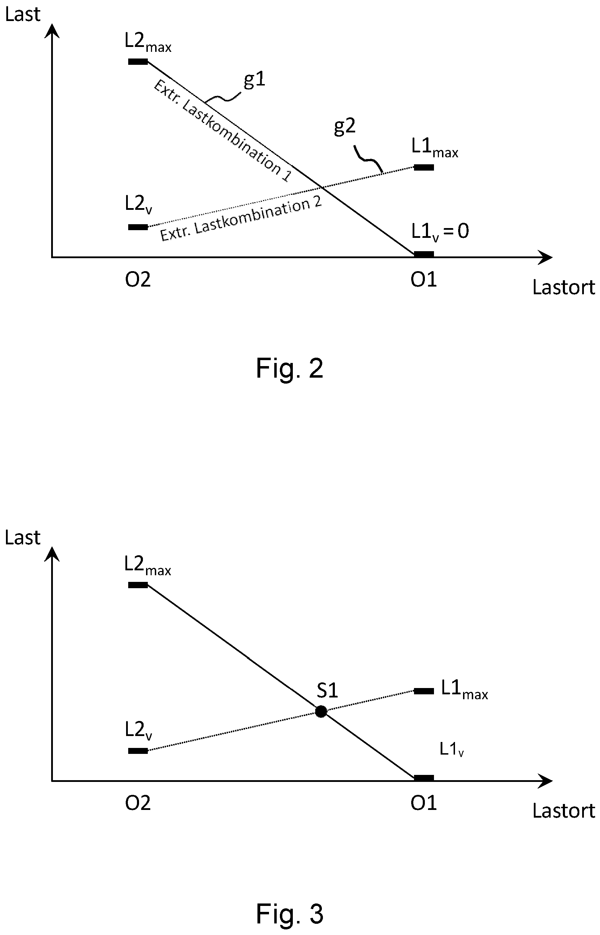

Die Figuren 2-5 zeigen ein Beispiel eines solchen Koordinatensystems, wobei die erste Achse die Abszisse (x-Achse) und die zweite Achse die Ordinate (y-Achse) bilden. Die Lastorte O1, O2 sind entlang der Abszisse voneinander beabstandet, wobei der Abstand beliebig gewählt werden kann, da es auf ihn für die Berechnung insbesondere ohnehin nicht ankommt.

In der Figur 2 sind für den zweiten Lastort O2 die maximale Traglast $L2_{max}$ (= Traglastgrenzwert isoliert für den zweiten Lastort O2) und für den ersten Lastort O1 die maximale Traglast $L1_{max}$ (= Traglastgrenzwert isoliert für den zweiten Lastort O1) eingezeichnet, wobei die maximale Traglast $L1_{max}$ des ersten Lastorts O1 vorliegend kleiner ist als die maximale Traglast $L2_{max}$ des zweiten Lastorts O2. Ferner ist die verbleibende maximale Traglast $L2_v$ am zweiten Lastort O2 eingezeichnet. Da die verbleibende maximale Traglast $L1_v$ am ersten Lastort O1 in diesem Ausführungsbeispiel Null ist, liegt diese auf der Abszisse.

Diese Werte werden nun über definierte Zusammenhänge zu extremen Lastkombinationen zusammengefasst (siehe Fig. 2: Extr. Lastkombination 1: $L2_{max}$ mit $L1_v = 0$; Extr. Lastkombination 2: $L1_{max}$ mit $L2_v$), wobei es sich bei dem hier betrachteten Ausführungsbeispiel um lineare Zusammenhänge handelt. Hierzu werden die jeweiligen Lastwerte der extremen Lastkombinationen mittels Verbindungsgeraden g1 und g2 miteinander verbunden (siehe Fig. 2: Extr. Lastkombination 1: $L2_{max}$ mit $L1_v = 0$ über eine erste Verbindungsgerade g1 miteinander verbunden; Extr. Lastkombination 2: $L1_{max}$ mit $L2_v$ über eine zweite Verbindungsgerade g2 miteinander verbunden).

Diese Verbindungsgeraden g1, g2 der beiden extremen Lastkombinationen schneiden sich in einem ersten Schnittpunkt S1, wie sich aus der Figur 3 ergibt. Der y-Wert bzw. Lastwert $L_{S1}$ des ersten Schnittpunkts S1 liegt dabei sowohl zwischen $L1_{max}$ und $L1_v = 0$ als auch zwischen $L2_{max}$ und $L2_v$. Der Lastwert $L_{S1}$ des ersten Schnittpunkts S1 hängt von jedem der vier Traglastgrenzwerte $L1_{max}$, $L1_v$, $L2_{max}$ und $L2_v$ ab und ergibt sich in dem hier betrachteten Ausführungsbeispiel zu:

$$L_{S1} = \frac{L1_{max} \cdot L2_{max}}{L1_{max} + L2_{max} - L2_v}.$$

Es fällt auf, dass $L_{S1}$ nicht vom Abstand zwischen den ersten und zweiten Lastorten O1, O2 entlang der Abszisse abhängt (dieser ist in den Figuren 2-5 beliebig gewählt).

Aus dieser Betrachtung ergibt sich, dass sich die maximal zulässigen Lastkombinationen zwischen ihren beiden Extrema (Extr. Lastkombination 1 und 2 gemäß Fig. 3) wie eine Wippe mit dem Drehpunkt im ersten Schnittpunkt S1 verhalten.

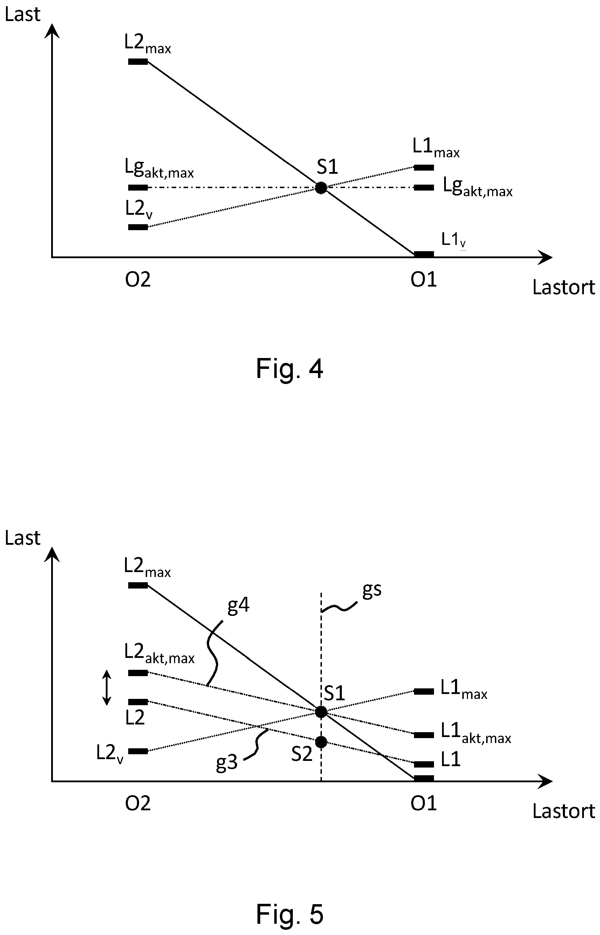

Daraus lässt sich unmittelbar eine spezielle maximal zulässige Lastkombination ableiten, welche in der Figur 4 durch eine strichpunktierte Verbindungsgerade dargestellt ist. Da jede maximal zulässige Lastkombination eine durch den ersten Schnittpunkt S1 verlaufende Verbindungsgerade zwischen gemeinsam gültigen, aktuell zulässigen Traglasten besitzt, entspricht die maximal zulässige Lastkombination mit einer parallel zur Abszisse verlaufenden Verbindungsgeraden gerade dem Gleichlastfall. Die zugehörigen gemeinsam gültigen, aktuell zulässigen Traglasten $Lg_{akt,max}$ besitzen also gleich große Werte und dürfen nicht gemeinsam überschritten werden.

Aus dem Lastwert $L_{S1}$ des ersten Schnittpunkts S1 lässt sich also direkt der relevante Traglastgrenzwert, d.h. die gemeinsam gültige, aktuell zulässige Traglast $Lg_{akt,max}$ für den gemeinsamen Lasthub mit mittigem Schwerpunkt ermitteln. Dieser Traglastgrenzwert $Lg_{akt,max}$ kann als Eintrag für eine Traglasttabelle für den Zwei-Hake-Betrieb dienen.

Beispielsweise in dem Fall, dass über die beiden Lastaufnahmemittel 21, 22 unterschiedliche Einzellasten gehoben werden oder dass bei einer gemeinsam gehobenen Last 40 ein außermittiger Schwerpunkt oder Schrägzug herrscht, sind die an den beiden Lastorten O1 und O2 wirkenden Lasten L1 und L2 unterschiedlich groß. Wird eine solche aktuelle Lastkombination (d.h. die aktuell wirkenden Lasten L1 und L2 sowie eine diese Lasten L1, L2 verbindende dritte Verbindungsgerade g3) in dem Koordinatensystem betrachtet (vgl. Figur 5), so ergibt sich ein zweiter Schnittpunkt S2 dieser dritten Verbindungsgeraden g3 mit einer senkrecht auf die Abszisse stehenden und durch den ersten Schnittpunkt S1 verlaufenden Geraden gs.

Die erfindungsgemäße Traglastüberwachung definiert nun einen unzulässigen Traglastbereich dadurch, dass der Lastwert $L_{S2}$ des zweiten Schnittpunkts S2 größer ist als der Lastwert $L_{S1}$ des ersten Schnittpunkts S1. Ist dagegen der Lastwert $L_{S2}$ des zweiten Schnittpunkts S2 kleiner (oder gleich) als der Lastwert $L_{S1}$ des ersten Schnittpunkts S1 (vgl. Fig. 5), so liegt die aktuelle Lastkombination im zulässigen Traglastbereich (vorausgesetzt, keine der aktuellen Lasten L1 und L2 überschreitet ihren zugehörigen Traglastgrenzwert $L1_{max}$ und $L2_{max}$).

Für die aktuelle Lastkombination (Fig. 5) ergibt sich die gesamte Traglastausnutzung $A_{Kran}$ des Krans aus dem Verhältnis der Lastwerte $L_{S1}$ und $L_{S2}$ der ersten und zweiten Schnittpunkte S1, S2:

$$A_{Kran} = \frac{L_{S2}}{L_{S1}}.$$

Aus der Differenz der Lastwerte $L_{S1}$ und $L_{S2}$ der ersten und zweiten Schnittpunkte S1, S2 lassen sich die für die aktuelle Lastkombination geltenden, aktuell zulässigen Traglasten $L1_{akt,max}$ und $L2_{akt,max}$ am ersten und zweiten Lastort O1, O2 durch eine lineare Verschiebung der aktuellen Lastwerte L1, L2 entlang der Ordinate um besagte Differenz berechnen (siehe Doppelpfeil in Fig. 5):

$$L1_{akt,max} = L1 + (L_{S1} - L_{S2}),$$

$$L2_{akt,max} = L2 + (L_{S1} - L_{S2}).$$

Die durch die Verschiebung um den Betrag ($L_{S1}$ - $L_{S2}$) ausgehend von g3 erhaltene vierte Verbindungsgerade g4 der berechneten maximal zulässigen Lastkombination verläuft nun durch den ersten Schnittpunkt S1.

Anhand der Figur 5 ist auch zu erkennen, warum im Zwei-Haken-Betrieb das zusätzliche Überwachungskriterium $L_{S2} \leq L_{S1}$ notwendig ist. Würde man nur auf die individuellen maximalen Traglasten $L1_{max}$, $L2_{max}$ an den jeweiligen Lastorten O1, O2 abstellen, würde ein unzulässiger Traglastbereich bei der in der Fig. 5 gezeigten aktuellen Lastkombination nicht erkannt werden. Selbst im Grenzfall (maximal zulässige Lastkombination mit Verbindungsgeraden g4) liegen die gemeinsam geltenden Grenzwerte $L1_{akt,max}$ und $L2_{akt,max}$ weit unterhalb der jeweiligen, für die Lastorte O1, O2 individuell geltenden maximalen Traglasten $L1_{max}$ und $L2_{max}$. Durch das Kriterium $L_{S2} \leq L_{S1}$ wird der tatsächlichen Traglastsituation im Zwei-Haken-Betrieb, bei der sich die beiden Lasten L1 und L2 gegenseitig beeinflussen, Rechnung getragen.

Vorzugsweise erfolgt aber zusätzlich zur Überwachung des Kriteriums $L_{S2} \leq L_{S1}$ eine Überwachung der individuellen Traglastausnutzungen am jeweiligen Lastort, d.h. $L1 \leq L1_{max}$ und $L2 \leq L2_{max}$.

Wird eines dieser Kriterien verletzt (d.h. ist $L_{S2} > L_{S1}$ oder $L1 > L1_{max}$ oder $L2 > L2_{max}$), so wird automatisch eine Gegenmaßnahme ergriffen. Beispielsweise kann dem Kranfahrer auf einer Anzeigeeinheit eine Warnung ausgegeben und/oder ein automatischer Bewegungsstopp erfolgen.

Es sei angemerkt, dass unabhängig vom konkreten Ausführungsbeispiel alternativ bereits ein Erreichen der jeweiligen Grenze die Maßnahme auslösen kann.

Vorzugsweise wird dem Kranfahrer auf einer Anzeigeeinheit die aktuelle Lastsituation und die geltenden Grenzwerte und/oder die aktuelle gesamte Traglastausnutzung $A_{Kran}$ angezeigt, bevorzugt graphisch angezeigt. Die Anzeige kann analog zu den Figuren 2-5 erfolgen, d.h. eine grafische Anzeige der Lage der aktuellen Lasten L1, L2, der jeweiligen Grenzwerte $L1_{max}$, $L2_{max}$, $L2_v$ sowie der entsprechenden Verbindungsgeraden g1, g2, g3 und der beiden Schnittpunkte S1 und S2. Alternativ oder zusätzlich können die jeweiligen Lastwerte und/oder die gesamte Traglastausnutzung $A_{Kran}$ numerisch angezeigt werden.

Die aktuell auf die beiden Lastorte O1, O2 wirkenden Lasten L1 und L2 werden durch eine Erfassungseinrichtung erfasst und an die Steuereinrichtung übermittelt. Dies kann beispielsweise durch Sensoren zur Erfassung der Kräfte in den ersten und zweiten Abspannsträngen 31, 32 erfolgen.

Die in den Figuren 2-5 gezeigten graphischen Darstellungen der Verbindungsgeraden g1, g2, g3, g4 und des Koordinatensystems dienen lediglich der Veranschaulichung der erfindungsgemäßen Berechnungsmethode. Letztere basiert auf mathematischen Gleichungen und Beziehungen, in die die verschiedenen genannten Größen eingehen. In der Steuereinheit muss daher z.B. nicht zwingend eine tatsächliche Verbindungsgerade g1, g2, g3, g4 definiert bzw. als Funktion gegeben sein.

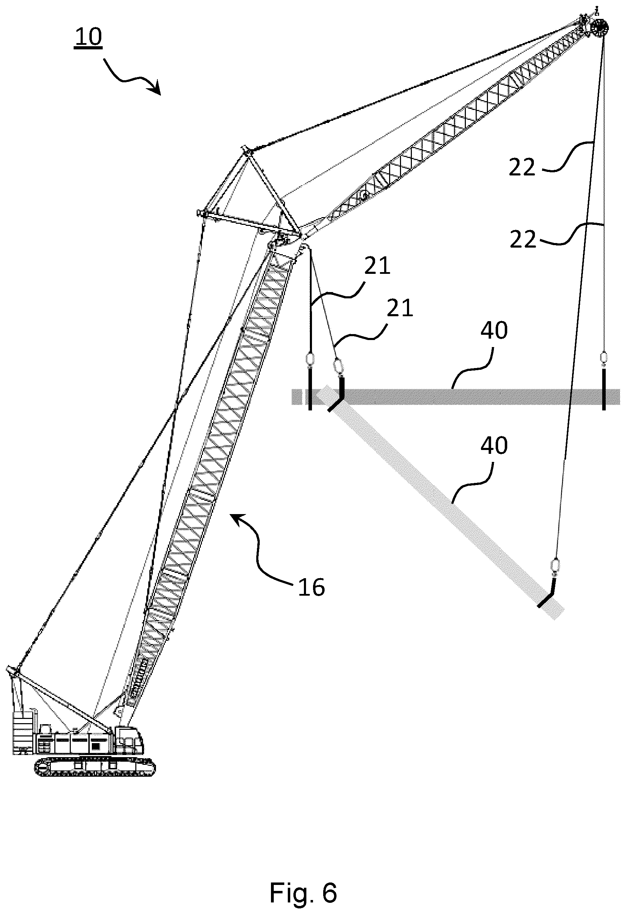

Beim Heben einer gemeinsamen Last mit zwei Haken an unterschiedlichen Lastorten ist zudem mit einem Schrägzug zu rechnen, vor allem bei einem Drehen einer gemeinsam gehobenen Last, welcher erfasst und in der Traglastausnutzung berücksichtigt werden muss. Eine solche Situation ist in der Figur 6 dargestellt, wobei das Lastaufnahmemittel 22 einen Schrägzug "nach innen" und das Lastaufnahmemittel 21 einen Schrägzug "nach außen" aufweisen.

Ein solcher Schrägzug hat Auswirkungen auf die Lastanzeigen, die Traglastüberwachung, den Seilzug und auf die Tragkonstruktion des Krans 10 bzw. des Auslegers 16. Da die Traglastüberwachung des Krans 10 insbesondere von einer vertikal hängenden Last (ohne Schrägzug) ausgeht, errechnet die Steuereinheit aus der über die Erfassungseinrichtung gemessenen Kraft eine falsche Last L1, L2, insbesondere wenn zur Ermittlung der Kräfte die Sensoren in den Abspannsträngen angeordnete sind, eine zu geringe aktuelle Last L1, L2. Die tatsächliche Last L1, L2 ist bei Auftreten von Schrägzug nach innen höher und darf nicht vernachlässigt werden, da diese einen Einfluss auf die tatsächliche Strukturbelastung des Auslegers 16 hat.

Um die Sicherheit beim Zwei-Haken-Betrieb mit gemeinsamer Last zu gewährleisten, ist eine Messung oder Ermittlung des Schrägzugwinkels des Lastaufnahmemittel 21 und/oder 22 erforderlich. Mit Kenntnis des Schrägzugwinkels kann die tatsächliche Last L1, L2 und die Traglastausnutzung $A_{Kran}$ des Krans 10 exakt berechnet und beispielsweise dem Kranfahrer angezeigt werden..

Vorzugsweise ist die Schrägzugüberwachung durch ein entsprechendes Assistenzsystem im Kran 10 implementiert, welches eigenständig oder Teil der erfindungsgemäßen Traglastüberwachung sein kann.

Bei einer Ausführungsform des Schrägzugüberwachungssystems wird der Schrägzug des Hubseils mindestens eines Lastaufnahmemittels 21, 22 nach vorne / hinten und zur Seite angezeigt und ggf. korrigiert.

Somit kann der Kranfahrer seitlichen und vorderen Zug erkennen und verhindern. Auf einer Anzeigeeinheit, z.B. am Krandisplay, wird dem Kranfahrer vorzugsweise angezeigt, ob sich das Hubseil oder die Hubseile in vertikaler Position befindet / befinden (z.B. in Form einer Draufsicht auf den jeweiligen Lastort O1, O2 am Ausleger 16). Ist ein Schrägzug vorhanden, kann vorgesehen sein, dass bei einer Ansteuerung durch den Kranfahrer (z.B. über einen Eingabeknopf am Meisterschalter) der Kran 10 automatisch durch ausgleichende Bewegungen des Auslegers 16 (z.B. der ersten und/oder zweiten Hubwinde) den Schrägzug korrigiert. Alternativ kann eine Korrektur automatisch (d.h. ohne Eingriff des Kranfahrers) durch die Steuereinheit durchführbar sein.

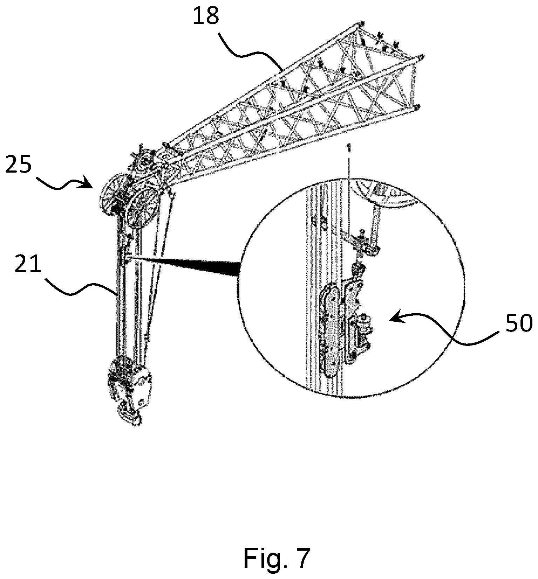

Die Figur 7 zeigt ein Ausführungsbeispiel für eine Sensorik 50 zur Erfassung des Schrägzugs des Hubseils des ersten Lastaufnahmemittels 21. Es ist der erste Auslegerkopf 25 der Wippspitze 18 mit einer Umlenkrolle zu erkennen, über die das Hubseil geführt ist. Eine der Einscherungen des Hubseils ist mit einer am ersten Auslegerkopf 25 befestigten Messeinrichtung 50 verbunden, die die Abweichung des Hubseils von der Vertikalen zur Seite (d.h. nach links / rechts) und parallel zur Wippebene (d.h. nach vorne / hinten) erfasst und an die Steuereinheit weiterleitet. Alternative Erfassungseinrichtungen sind selbstverständlich denkbar. Optional kann eine zweite Sensorik 50 am zweiten Lastaufnahmemittel 22 bzw. am zweiten Auslegerkopf 26 vorgesehen sein.

**Bezugszeichenliste:**

| | |
|---|---|
| 10 | Kran |
| 12 | Unterwagen |
| 14 | Oberwagen |
| 16 | Ausleger |
| 17 | Hauptausleger |
| 18 | Auslegerspitze |
| 21 | Erstes Lastaufnahmemittel |
| 22 | Zweites Lastaufnahmemittel |
| 25 | Erster Auslegerkopf |
| 26 | Zweiter Auslegerkopf |
| 31 | Erster Abspannstrang |
| 32 | Zweiter Abspannstrang |
| 40 | Aufgenommene Last |
| 50 | Sensorik zur Schrägzugerfassung |
| g1 | Erste Verbindungsgerade |
| g2 | Zweite Verbindungsgerade |
| g3 | Dritte Verbindungsgerade |
| g4 | Vierte Verbindungsgerade |
| L1 | Erste erfasste Last |
| L2 | Zweite erfasste Last |
| $L1_{akt,max}$ | Aktuell zulässige Traglast am ersten Lastort |
| $L2_{akt,max}$ | Aktuell zulässige Traglast am zweiten Lastort |
| $Lg_{akt,max}$ | Gemeinsam gültige, aktuell zulässige Traglast |

| | |
|---|---|
| $L1_{max}$ | Maximale Traglast am ersten Lastort |
| $L2_{max}$ | Maximale Traglast am zweiten Lastort |
| $L1_v$ | Verbleibende maximale Traglast) |
| $L2_v$ | Verbleibende maximale Traglast) |
| O1 | Erster Lastort |
| O2 | Zweiter Lastort |
| S1 | Erster Schnittpunkt |
| S2 | Zweiter Schnittpunkt |

**Patentansprüche**

1. Verfahren zur Traglastüberwachung eines Krans (10), wobei der Kran (10) einen Ausleger (16) und zwei Lastaufnahmemittel (21, 22) zum Heben einer gemeinsamen Last (40) oder unterschiedlicher Einzellasten (40) umfasst, wobei ein erstes Lastaufnahmemittel (41) eine Last trägt, welche an einem ersten Lastort (O1) in den Ausleger (16) einleitet wird, wobei ein zweites Lastaufnahmemittel (22) eine Last trägt, welche an einem vom ersten Lastort (O1) beabstandeten zweiten Lastort (O2) in den Ausleger (16) einleitet wird, wobei eine am ersten Lastort (O1) in den Ausleger (16) aktuell eingeleitete erste Last (L1) und eine am zweiten Lastort (O2) in den Ausleger (16) aktuell eingeleitete zweite Last (L2) erfasst wird; **dadurch gekennzeichnet,**

   - **dass** in einem Koordinatensystem, in welchem entlang einer ersten Achse zwei voneinander beabstandete Punkte die beiden Lastorte (O1, O2) repräsentieren und in welchem eine zur ersten Achse senkrechte zweite Achse eine Last am jeweiligen Lastort (O1, O2) repräsentiert, folgende Größen definiert sind:

      - ein erster definierter Zusammenhang zwischen einer maximalen Traglast ($L1_{max}$) am ersten Lastort (O1) und einer bei maximaler Traglastauslastung am ersten Lastort (O1) maximal zulässigen Traglast ($L2_v$) am zweiten Lastort (O2),
      - ein zweiter definierter Zusammenhang zwischen einer maximalen Traglast ($L2_{max}$) am zweiten Lastort (O2) und einer bei maximaler Traglastauslastung am zweiten Lastort (O2) maximal zulässigen Traglast ($L1_v$) am ersten Lastort (O1), und
      - ein erster Schnittpunkt (S1), an dem die ersten und zweiten definierten Zusammenhänge gleichzeitig erfüllt sind;

   - **dass** ein dritter definierter Zusammenhang zwischen der ersten Last (L1) und der zweiten Last (L2) im definierten Koordinatensystem ermittelt wird;
   - **dass** ein zweiter Schnittpunkt (S2) ermittelt wird, an dem der dritte definierte Zusammenhang und der erste Schnittpunkt (S1) denselben Wert entlang der ersten Achse besitzen; und
   - **dass** automatisch eine Maßnahme ergriffen wird, wenn entlang der zweiten Achse der Wert des zweiten Schnittpunkts (S2) größer ist als der Wert des ersten Schnittpunkts (S1), wobei Maßnahme vorzugsweise die Ausgabe einer Warnung und/oder einen Eingriff in eine aktuelle Bewegung des Krans (10) durch eine Steuereinheit umfasst.

2. Verfahren nach Anspruch 1, wobei die bei maximaler Traglastauslastung am zweiten Lastort (O2) maximal zulässige Traglast ($L1_v$) am ersten Lastort (O1) Null ist und/oder die bei maximaler Traglastauslastung am ersten Lastort (O1) maximal zulässige Traglast (L2v) am zweiten Lastort (O2) Null ist

3. Verfahren nach einem der vorhergehenden Ansprüche, wobei die ersten, zweiten und dritten definierten Zusammenhänge lineare Zusammenhänge sind, wobei insbesondere

   - der erste lineare Zusammenhang eine erste Verbindungsgerade (g1) zwischen der maximalen Traglast ($L2_{max}$) am zweiten Lastort (O2) und der bei maximaler Traglastauslastung am zweiten Lastort (O2) maximal zulässigen Traglast ($L1_v$) am ersten Lastort (O1) ist,
   - der zweite lineare Zusammenhang eine zweite Verbindungsgerade (g2) zwischen der maximalen Traglast ($L1_{max}$) am ersten Lastort (O1) und der bei maximaler Traglastauslastung am ersten Lastort (O1) maximal zulässigen Traglast ($L2_v$) am zweiten Lastort (O2) ist,
   - der dritte lineare Zusammenhang eine dritte Verbindungsgerade (g3) zwischen der ersten Last (L1) und der zweiten Last (L2) ist,
   - der erste Schnittpunkt (S1) ein Schnittpunkt der ersten und zweiten Verbindungsgeraden (g1, g2) ist und
   - der zweite Schnittpunkt (S2) ein Schnittpunkt der dritten Verbindungsgeraden (g3) mit einer Senkrechten (gs) auf die erste Achse durch den ersten Schnittpunkt (S1) ist.

4. Verfahren nach einem der vorhergehenden Ansprüche, wobei für einen Hub einer gemeinsamen Last (40) eine maximale Traglast ($Lg_{akt,max}$) für den ersten und zweiten Lastort (O1, O2) definiert ist, welche dem Wert des ersten Schnittpunkts (S1) entlang der zweiten Achse entspricht, wobei automatisch eine Maßnahme ergriffen wird, wenn die erste erfasste Last (L1) oder die zweite erfasste Last (L2) größer als diese maximale Traglast ($Lg_{akt,max}$) ist, wobei die Maßnahme vorzugsweise die Ausgabe einer Warnung und/oder einen Eingriff in eine aktuelle Bewegung des Krans (10) durch die Steuereinheit umfasst.

5. Verfahren nach einem der vorhergehenden Ansprüche, wobei die erste Last (L1) durch Erfassung einer ersten Kraft in einem ersten Abspannstrang (31) des Auslegers (16) und die zweite Last (L2) durch Erfassung einer zweiten Kraft in einem zweiten Abspannstrang (32) des Auslegers (16) ermittelt wird, wobei die ersten und zweiten Kräfte vorzugsweise über an den ersten und zweiten Abspannsträngen (31, 32) angeordnete Sensoren erfasst und an die Steuereinheit übermittelt werden.

6. Verfahren nach einem der vorhergehenden Ansprüche, wobei eine aktuell zulässige Traglast ($L1_{akt,max}$) am ersten Lastort (O1) und eine aktuell zulässige Traglast ($L2_{akt,max}$) am zweiten Lastort (O2) aus dem ersten Schnittpunkt (S1) und dem ermittelten zweiten Schnittpunkt (S2) ermittelt werden, falls entlang der zweiten Achse der Wert des zweiten Schnittpunkts (S2) kleiner als der Wert des ersten Schnittpunkts (S1) ist, wobei automatisch eine Maßnahme ergriffen wird, wenn die erste Last (L1) größer als die aktuell zulässige Traglast ($L1_{akt,max}$) am ersten Lastort (O1) ist oder wenn die zweite Last (L2) größer als die aktuell zulässige Traglast ($L2_{akt,max}$) am zweiten Lastort (O2) ist, wobei die Maßnahme vorzugsweise die Ausgabe einer Warnung und/oder einen Eingriff in eine aktuelle Bewegung des Krans (10) durch die Steuereinheit umfasst.

7. Verfahren nach dem vorhergehenden Anspruch, wobei die aktuell zulässige Traglast ($L1_{akt,max}$) am ersten Lastort (O1) durch Addition der ersten Last (L1) und der Differenz der ersten und zweiten Schnittpunkte (S1, S2) entlang der zweiten Achse ermittelt wird und die aktuell zulässige Traglast ($L2_{akt,max}$) am zweiten Lastort (O2) durch Addition der zweiten Last (L2) und der Differenz der ersten und zweiten Schnittpunkte (S1, S2) entlang der zweiten Achse ermittelt wird.

8. Verfahren nach einem der vorhergehenden Ansprüche, wobei automatisch eine Maßnahme ergriffen wird, wenn die erste Last (L1) größer als die maximale Traglast ($L1_{max}$) am ersten Lastort (O1) ist oder wenn die zweite Last (L2) größer als die maximale Traglast ($L2_{max}$) am zweiten Lastort (O2) ist, wobei die Maßnahme vorzugsweise die Ausgabe einer Warnung und/oder einen Eingriff in eine aktuelle Bewegung des Krans (10) durch die Steuereinheit umfasst.

9. Verfahren nach einem der vorhergehenden Ansprüche, wobei der erste Lastort (O1) relativ zum zweiten Lastort (O2) bewegbar ist, insbesondere durch Bewegung eines den ersten Lastort (O1) aufweisenden Teilauslegers (18) relativ zu einem den zweiten Lastort (O2) aufweisenden Hauptausleger (17) des Krans (10), und/oder wobei die ersten und zweiten Lastorte (O1, O2) entlang des Auslegers (16) einen konstanten Abstand zueinander aufweisen.

10. Verfahren nach einem der vorhergehenden Ansprüche, wobei der Ausleger (16) einen um eine horizontale Wippachse schwenkbar an einem Trägergerät, insbesondere einem drehbaren Oberwagen (14), des Krans (10) gelagerten Hauptausleger (17) mit einem zweiten Auslegerkopf (26) und eine starr oder um eine horizontale Schwenkachse schwenkbar am Hauptausleger (17) befestigte Auslegerspitze (18) mit einem ersten Auslegerkopf (25) umfasst, wobei das erste Lastaufnahmemittel (21) über den ersten Auslegerkopf (25) und das zweite Lastaufnahmemittel (22) über den zweiten Auslegerkopf (26) geführt ist, wobei sich der erste Lastort (O1) am ersten Auslegerkopf (25) und der zweite Lastort (O2) am zweiten Auslegerkopf (26) befindet.

11. Verfahren nach einem der vorhergehenden Ansprüche, wobei das erste Lastaufnahmemittel (21) mittels einer ersten Hubwinde und das zweite Lastaufnahmemittel (22) mittels einer zweiten Hubwinde verstellbar sind, wobei die Hubwinden mittels einer Steuereinheit des Krans (10) steuerbar und/oder regelbar sind, wobei die beiden Lastaufnahmemittel (21, 22) vorzugsweise unabhängig voneinander verstellbar sind.

12. Verfahren nach einem der vorhergehenden Ansprüche, wobei eine Abweichung des ersten Lastaufnahmemittels (21) und/oder des zweiten Lastaufnahmemittels (22) von der Vertikalen erfasst und bei einer erkannten Abweichung eine Warnung ausgegeben und/oder eine Eingabeaufforderung angezeigt und/oder durch die Steuereinheit automatisch eine Gegenmaßnahme ergriffen wird, wobei die Gegenmaßnahme vorzugsweise einen Bewegungsstopp oder eine die Abweichung ausgleichende Bewegung des Auslegers (16) umfasst.

13. Kran (10) mit einem Ausleger (16), mit zwei Lastaufnahmemitteln (21, 22) zum Heben einer gemeinsamen Last (40) oder unterschiedlicher Einzellasten (40), wobei ein mittels einer ersten Hubwinde verstellbares erstes Lastaufnahmemittel (21) an einem ersten Lastort (O1) und ein mittels einer zweiten Hubwinde verstellbares zweites Lastaufnahmemittel (22) an einem vom ersten Lastort (O1) beabstandeten zweiten Lastort (O2) mit dem Ausleger (16) verbunden ist, und mit einer Erfassungseinrichtung, mittels welcher eine in den Ausleger (16) am ersten Lastort (O1) eingeleitete erste Last (L1) und eine in den Ausleger (16) am zweiten Lastort (O2) eingeleitete zweite Last (L2) erfassbar sind, **gekennzeichnet durch** eine Steuereinheit, welche eingerichtet ist, die Schritte des Verfahrens nach einem der vorhergehenden Ansprüche auszuführen.

14. Kran nach dem vorhergehenden Anspruch, wobei der Ausleger (16) einen um eine horizontale Wippachse schwenkbar an einem Trägergerät, insbesondere einem drehbaren Oberwagen (14), des Krans (10) gelagerten Hauptausleger (17) mit einem zweiten Auslegerkopf (26) und eine starr oder um eine horizontale Schwenkachse schwenkbar am Hauptausleger (17) befestigte Auslegerspitze (18) mit einem ersten Auslegerkopf (25) umfasst, wobei das erste Lastaufnahmemittel (21) über den ersten Auslegerkopf (25) und das zweite Lastaufnahmemittel (22) über den zweiten Auslegerkopf (26) geführt ist, wobei sich der erste Lastort (O1) am ersten Auslegerkopf (25) und der zweite Lastort (O2) am zweiten Auslegerkopf (26) befindet.

15. Computerprogrammprodukt umfassend Befehle, die bei der Ausführung des Programms bewirken, dass die Schritte des Verfahrens nach einem der Ansprüche 1 bis 12 von der Steuereinheit des Krans (10) nach einem der Ansprüche 13 bis 14 ausgeführt werden.

**Claims**

1. Method for payload monitoring of a crane (10), wherein the crane (10) comprises a boom (16) and two load suspension means (21, 22) for lifting one joint load (40) or different individual loads (40), wherein a first load suspension means (41) carries a load which is introduced into the boom (16) at a first load location (O1), wherein a second load suspension means (22) carries a load which is introduced into the boom (16) at a second load location (O2) that is spaced apart from the first load location (01),

   wherein a first load (L1) currently introduced into the boom (16) at the first load location (O1) and a second load (L2) currently introduced into the boom (16) at the second load location (O2) is detected;
   **characterized in that**
   in a coordinate system, in which along a first axis two mutually spaced points represent the two load locations (O1, O2) and in which a second axis perpendicular to the first axis represents a load at the respective load location (O1, O2), the following variables are defined:

   - a first defined correlation between a maximum payload ($L1_{max}$) at the first load location (O1) and a maximally permissible payload ($L2_v$) at the second load location (O2) in the case of maximum payload utilisation at the first load location (O1),

   - a second defined correlation between a maximum payload ($L2_{max}$) at the second load location (O2) and a maximally permissible payload ($L1_v$) at the first load location (O1) in the case of maximum payload utilisation at the second load location (O2), and
   - a first intersection point (S1), at which the first and second defined correlations are fulfilled simultaneously;
   - **in that** a third defined correlation between the first load (L1) and the second load (L2) is determined in the defined coordinate system;
   - **in that** a second intersection point (S2) is determined, at which the third defined correlation and the first intersection point (S1) have the same value along the first axis; and
   - **in that** a measure is automatically taken if, along the second axis, the value of the second intersection point (S2) is greater than the value of the first intersection point (S1), wherein the measure preferably includes outputting a warning and/or intervention in a current movement of the crane (10) by a control unit.

2. Method according to claim 1, wherein the maximally permissible payload ($L1_v$) at the first load location (O1) in the case of a maximum payload utilisation at the second load location (O2) is zero, and/or the maximally permissible payload ($L2_v$) at the second load location (O2) in the case of a maximum payload utilisation at the first load location (O1) is zero.

3. Method according to either of the preceding claims, wherein the first, second and third defined correlations are linear correlations, wherein in particular

   - the first linear correlation is a first straight connecting line (g1) between the maximum payload ($L2_{max}$) at the second load location (O2) and the maximally permissible payload ($L1_v$) at the first load location (O1) in the case of maximum payload utilisation at the second load location (O2),
   - the second linear correlation is a second straight connecting line (g2) between the maximum payload ($L1_{max}$) at the first load location (O1) and the maximally permissible payload ($L2_v$) at the first second load location (O2) in the case of maximum payload utilisation at the first load location (01),
   - the third linear correlation is a third straight connecting line (g3) between the first load (L1) and the second load (L2),
   - the first intersection point (S1) is an intersection point of the first and second straight connecting lines (g1, g2), and

- the second intersection point (S2) is an intersection point of the third straight connecting line (g3) with a vertical line (gs) on the first axis through the first intersection point (S1).

4. Method according to any one of the preceding claims, wherein for a lift of a joint load (40) a maximum payload ($Lg_{akt,max}$) for the first and second load location (O1, O2) is defined, which corresponds to the value of the first intersection point (S1) along the second axis, wherein a measure is automatically taken if the first detected load (L1) or the second detected load (L2) is greater than this maximum payload ($Lg_{akt,max}$), wherein the measure preferably includes outputting a warning and/or intervention in a current movement of the crane (10) by the control unit.

5. Method according to any one of the preceding claims, wherein the first load (L1) is determined by acquisition of a first force in a first guy rope (31) of the boom (16) and the second load (L2) is determined by acquisition of a second force in a second guy rope (32) of the boom (16), wherein the first and second forces are preferably acquired via sensors arranged on the first and second guy ropes (31, 32), and transmitted to the control unit.

6. Method according to any one of the preceding claims, wherein a currently permissible payload ($L1_{akt,max}$) at the first load location (O1) and a currently permissible payload ($L2_{akt,max}$) at the second load location (O2) are determined from the first intersection point (S1) and the determined second intersection point (S2), if, along the second axis, the value of the second intersection point (S2) is smaller than the value of the first intersection point (S1), wherein a measure is automatically taken if the first load (L1) is greater than the currently permissible payload ($L1_{akt,max}$) at the first load location (O1), or if the second load (L2) is greater than the currently permissible payload ($L2_{akt,max}$) at the second load location (O2), wherein the measure preferably includes outputting a warning and/or intervention in a current movement of the crane (10) by the control unit.

7. Method according to the preceding claim, wherein the currently permissible payload ($L1_{akt,max}$) at the first load location (O1) is determined by adding the first load (L1) and the difference between the first and second intersection points (S1, S2) along the second axis, and the currently permissible payload ($L2_{akt,max}$) at the second load location (O2) is determined by adding the second load (L2) and the difference between the first and second intersection points (S1, S2) along the second axis.

8. Method according to any one of the preceding claims, wherein a measure is automatically taken if the first load (L1) is greater than the maximum payload ($L1_{max}$) at the first load location (O1), or if the second load (L2) is greater than the maximum payload ($L2_{max}$) at the second load location (O2), wherein the measure preferably includes outputting a warning and/or intervention in a current movement of the crane (10) by the control unit.

9. Method according to any one of the preceding claims, wherein the first load location (01) is movable relative to the second load location (O2), in particular by moving a sub-boom (18), comprising the first load location (01), relative to a main boom (17) of the crane (10), comprising the second load location (O2), and/or wherein the first and second load locations (O1, O2) are at a constant distance from one another along the boom (16).

10. Method according to any one of the preceding claims, wherein the boom (16) comprises a main boom (17) which is mounted on a carrier device, in particular a rotatable upper structure (14), of the crane (10) so as to be pivotable about a horizontal tilt axis and comprises a second boom head (26) and a boom tip (18) which is fastened to the main boom (17) in a rigid manner or so as to be pivotable about a horizontal pivot axis and comprises a first boom head (25), wherein the first load suspension means (21) is guided over the first boom head (25), and the second load suspension means (22) is guided over the second boom head (26), the first load location (O1) is located on the first boom head (25), and the second load location (O2) is located on the second boom head (26).

11. Method according to any one of the preceding claims, wherein the first load suspension means (21) is adjustable by means of a first hoisting winch and the second load suspension means (22) is adjustable by means of a second hoisting winch, wherein the hoisting winches are controllable by means of a control unit of the crane (10), wherein the two load suspension means (21, 22) are preferably adjustable independently of one another.

12. Method according to any one of the preceding claims, wherein a deviation of the first load suspension means (21) and/or of the second load suspension means (22) from the vertical is acquired and, in the case of an identified deviation, a warning is output and/or a command prompt is displayed and/or a countermeasure is taken automatically by the control unit, wherein the countermeasure preferably includes a movement stop or a movement of the boom (16) that compensates the deviation.

13. Crane (10) comprising a boom (16), comprising two load suspension means (21, 22) for lifting a joint load (40) or different individual loads (40), wherein a first load suspension means (21), adjustable by means of a first hoisting winch, is connected to the boom (16) at a first load location (01), and a second load suspension means (22), adjustable by a second hoisting winch, is connected to the boom at a second load location (O2) that is spaced apart from the first load location (O1), and comprising a detection device, by means of which a first load (L1) introduced into the boom (16) at the first load location (01), and a second load (L2) introduced into the boom (16) at the second load location (O2), can be detected, **characterised by**

a control unit which is configured to carry out the steps of the method according to any one of the preceding claims.

14. Crane according to the preceding claim, wherein the boom (16) comprises a main boom (17) which is mounted on a carrier device, in particular a rotatable upper structure (14), of the crane (10) so as to be pivotable about a horizontal tilt axis and comprises a second boom head (26) and a boom tip (18) which is fastened to the main boom (17) in a rigid manner or so as to be pivotable about a horizontal pivot axis and comprises a first boom head (25), wherein the first load suspension means (21) is guided over the first boom head (25), and the second load suspension means (22) is guided over the second boom head (26), the first load location (O1) is located on the first boom head (25), and the second load location (O2) is located on the second boom head (26).

15. Computer programme product comprising commands which, when the programme is executed, cause the steps of the method according to any one of claims 1 to 12 to be carried out by the control unit of the crane (10) according to either claim 13 or claim 14.

## Revendications

1. Procédé de surveillance de capacité de charge d'une grue (10), dans lequel la grue (10) comprend une flèche (16) et deux moyens de réception de charge (21, 22) destinés à lever une charge commune (40) ou différentes charges individuelles (40), dans lequel un premier moyen de réception de charge (41) supporte une charge, qui est appliquée dans la flèche (16)sur un premier emplacement de charge (O1), dans lequel un deuxième moyen de réception de charge (22) supporte une charge, qui est appliquée dans la flèche (16) sur un deuxième emplacement de charge (O2) espacé du premier emplacement de charge (O1),

dans lequel une première charge (L1) appliquée actuellement dans la flèche (16) sur le premier emplacement de charge (O1) et une deuxième charge (L2) appliquée actuellement dans la flèche (16) sur le deuxième emplacement de charge (O2) sont détectées ;
**caractérisé en ce**
**que** sont définies dans un système de coordonnées, dans lequel deux points espacés l'un de l'autre représentent les deux emplacements de charge (O1, O2) le long d'un premier axe et dans lequel un deuxième axe perpendiculaire au premier axe représente une charge sur l'emplacement de charge (O1, O2) respectif, des grandeurs suivantes :

- un premier lien défini entre une capacité de charge maximale ($L1_{max}$) sur le premier emplacement de charge (O1) et une capacité de charge ($L2_v$) maximale admise pour une utilisation maximale de capacité de charge sur le premier emplacement de charge (O1) sur le deuxième emplacement de charge (O2),
- un deuxième lien défini entre une capacité de charge maximale ($L2_{max}$) sur le deuxième emplacement de charge (O2) et une capacité de charge maximale admise ($L1_v$) pour une utilisation maximale de capacité de charge sur le deuxième emplacement de charge (O2) sur le premier emplacement de charge (O1), et
- un premier point d'intersection (S1), sur lequel les premier et deuxième liens définis sont satisfaits simultanément ;
- **qu'**un troisième lien défini entre la première charge (L1) et la deuxième charge (L2) est déterminé dans le système de coordonnées défini ;
- **qu'**un deuxième point d'intersection (S2) est déterminé, sur lequel le troisième lien défini et le premier point d'intersection (S1) possèdent la même valeur le long du premier axe ; et
- **qu'**une mesure est prise automatiquement lorsque la valeur du deuxième point d'intersection (S2) est plus grande le long du deuxième axe que la valeur du premier point d'intersection (S1), dans lequel la mesure comprend de préférence l'émission d'un avertissement et/ou une intervention dans un déplacement actuel de la grue (10) par une unité de commande.

2. Procédé selon la revendication 1, dans lequel la capacité de charge maximale admise ($L1_v$) pour une utilisation maximale de capacité de charge sur le deuxième emplacement de charge (O2) est nulle sur le premier emplacement de charge (O1) et/ou la capacité de charge maximale admise ($L2_v$) pour une utilisation maximale de capacité de charge sur le premier emplacement de charge (O1) est nulle sur le deuxième emplacement de charge (O2).

3. Procédé selon l'une quelconque des revendications précédentes, dans lequel les premier, deuxième et troisième liens sont des liens linéaires, dans lequel en particulier

   - le premier lien linéaire est une première droite de liaison (g1) entre la capacité de charge maximale ($L2_{max}$) sur le deuxième emplacement de charge (O2) et la capacité de charge maximale admise ($L1_v$) pour une utilisation maximale de capacité de charge sur le deuxième emplacement de charge (O2) sur le premier emplacement de charge (O1),
   - le deuxième lien linéaire est une deuxième droite de liaison (g2) entre la capacité de charge maximale ($L1_{max}$) sur le premier emplacement de charge (O1) et la capacité de charge maximale admise ($L2_v$) pour une utilisation maximale de capacité de charge sur le premier emplacement de charge (O1) sur le deuxième emplacement de charge (O2),
   - le troisième lien linéaire est une troisième droite de liaison (g3) entre la première charge (L1) et la deuxième charge (L2),
   - le premier point d'intersection (S1) est un point d'intersection des première et deuxième droites de liaison (g1, g2), et
   - le deuxième point d'intersection (S2) est un point d'intersection de la troisième droite de liaison (g3) avec une perpendiculaire (gs) sur le premier axe à travers le premier point d'intersection (S1).

4. Procédé selon l'une quelconque des revendications précédentes, dans lequel une capacité de charge maximale ($Lg_{act,max}$) pour le premier et le deuxième emplacement de charge (O1, O2) est définie pour un levage d'une charge commune (40), laquelle correspond à la valeur du premier point d'intersection (S1) le long du deuxième axe, dans lequel une mesure est prise automatiquement lorsque la première charge détectée (L1) ou la deuxième charge détectée (L2) est supérieure à ladite capacité de charge maximale ($Lg_{act,max}$), dans lequel la mesure comprend de préférence l'émission d'un avertissement et/ou une intervention dans un mouvement actuel de la grue (10) par l'unité de commande.

5. Procédé selon l'une quelconque des revendications précédentes, dans lequel la première charge (L1) est déterminée en détectant une première force dans une corde de haubanage (31) de la flèche (16) et la deuxième charge (L2) est déterminée en détectant une deuxième force dans une deuxième corde de haubanage (32) de la flèche (16), dans lequel les première et deuxièmes forces sont détectées de préférence par l'intermédiaire de capteurs disposés sur les première et deuxième cordes de haubanage (31, 32) et sont transmises à l'unité de commande.

6. Procédé selon l'une quelconque des revendications précédentes, dans lequel une capacité de charge actuellement admise ($L1_{act,max}$) sur le premier emplacement de charge (O1) et une capacité de charge actuellement admise ($L2_{act,max}$) sur le deuxième emplacement de charge (O2) sont déterminées à partir du premier point d'intersection (S1) et du deuxième point d'intersection (S2) déterminé si la valeur du deuxième point d'intersection (S2) est inférieure à la valeur du premier point d'intersection (S1) le long du deuxième axe, dans lequel une mesure est automatiquement prise lorsque la première charge (L1) est supérieure à la capacité de charge actuellement admise ($L1_{act,max}$) sur le premier emplacement de charge (O1) ou lorsque la deuxième charge (L2) est supérieure à la capacité de charge actuellement admise ($L2_{act,max}$) sur le deuxième emplacement de charge (O2), dans lequel la mesure comprend de préférence l'émission d'un avertissement et/ou une intervention dans un mouvement actuel de la grue (10) par l'unité de commande.

7. Procédé selon la revendication précédente, dans lequel la capacité de charge actuellement admise ($L1_{act,max}$) sur le premier emplacement de charge (O1) est déterminée par ajout de la première charge (L1) et de la différence des premier et deuxième points d'intersection (S1, S2) le long du deuxième axe et la capacité de charge actuellement admise ($L2_{act,max}$) sur le deuxième emplacement de charge (O2) est déterminée par ajout de la deuxième charge (L2) et de la différence des premier et deuxième points d'intersection (S1, S2) le long du deuxième axe.

8. Procédé selon l'une quelconque des revendications précédentes, dans lequel une mesure est automatiquement prise lorsque la première charge (L1) est supérieure à la capacité de charge maximale ($L1_{max}$) sur le premier emplacement de charge (O1) ou lorsque la deuxième charge (L2) est supérieure à la capacité de charge maximale ($L2_{max}$) sur le deuxième emplacement de charge (O2), dans lequel la mesure comprend de préférence l'émission d'un avertissement et/ou une intervention dans un mouvement actuel de la grue (10) par l'unité de commande.

9. Procédé selon l'une quelconque des revendications précédentes, dans lequel le premier emplacement de charge (O1) peut être déplacé par rapport au deuxième emplacement de charge (O2), en particulier en déplaçant une flèche partielle (18) présentant le premier emplacement de charge (O1) par rapport à une flèche principale (17) présentant le deuxième emplacement de charge (O2) de la grue (10), et/ou dans lequel les premier et deuxième emplacements de charge (O1, O2) présentent l'un par rapport à l'autre une distance constante le long de la flèche (16).

10. Procédé selon l'une quelconque des revendications précédentes, dans lequel la flèche (16) comprend une flèche principale (17) montée sur un appareil de support, en particulier un chariot supérieur (14) rotatif, de la grue (10) de manière à pouvoir pivoter autour d'un axe de basculement horizontal, avec une deuxième tête de flèche (26) et une pointe de flèche (18) fixée sur la flèche principale (17) de manière rigide ou de manière à pouvoir pivoter autour d'un axe de pivotement horizontal avec une première tête de flèche (25), dans lequel le premier moyen de réception de charge (21) est guidé sur la première tête de flèche (25) et le deuxième moyen de réception de charge (22) est guidé sur la deuxième tête de flèche (26), dans lequel le premier emplacement de charge (O1) se trouve sur la première tête de flèche (25) et le deuxième emplacement de charge (O2) se trouve sur la deuxième tête de flèche (26).

11. Procédé selon l'une quelconque des revendications précédentes, dans lequel le premier moyen de réception de charge (21) peut être ajusté au moyen d'un premier treuil de levage et le deuxième moyen de réception de charge (22) peut être ajusté au moyen d'un deuxième treuil de levage, dans lequel les treuils de levage peuvent être commandés et/ou régulés au moyen d'une unité de commande de la grue (10), dans lequel les deux moyens de réception de charge (21, 22) peuvent être ajustés de préférence indépendamment l'un de l'autre.

12. Procédé selon l'une quelconque des revendications précédentes, dans lequel un écart du premier moyen de réception de charge (21) et/ou du deuxième moyen de réception de charge (22) par rapport à la verticale est détecté et un avertissement est émis lors de l'identification d'un écart et/ou une demande d'entrée est affichée et/ou une contre-mesure est prise automatiquement par l'unité de commande, dans lequel la contre-mesure comprend de préférence un arrêt de mouvement ou un mouvement de la flèche (16) équilibrant l'écart.

13. Grue (10) avec une flèche (16), avec deux moyens de réception de charge (21, 22) destinés à lever une charge commune (40) ou différentes charges individuelles (40), dans laquelle un premier moyen de réception de charge (21) pouvant être ajusté au moyen d'un premier treuil de levage sur un premier emplacement de charge (O1) et un deuxième moyen de réception de charge (22) pouvant être ajusté au moyen d'un deuxième treuil de levage sont reliés à la flèche (16) sur un deuxième emplacement de charge (O2) espacé du premier emplacement de charge (O1), et avec un dispositif de détection, au moyen duquel une première charge (L1) appliquée sur le premier emplacement de charge (O1) dans la flèche (16) et une deuxième charge (L2) appliquée sur le deuxième emplacement de charge (O2) dans la flèche (16) peuvent être détectées,
**caractérisée par**
une unité de commande, qui est mise au point pour exécuter les étapes du procédé selon l'une quelconque des revendications précédentes.

14. Grue selon la revendication précédente, dans laquelle la flèche (16) comprend une flèche principale (17) montée sur un appareil de support, en particulier un chariot supérieur (14) rotatif, de la grue (10) de manière à pouvoir pivoter autour d'un axe de basculement horizontal avec une deuxième tête de flèche (26) et une pointe de flèche (18) fixée sur la flèche principale (17) de manière rigide ou de manière à pouvoir pivoter autour d'un axe de pivotement horizontal avec une première tête de flèche (25), dans laquelle le premier moyen de réception de charge (21) est guidé sur la première tête de flèche (25) et le deuxième moyen de réception de charge (22) est guidé sur la deuxième tête de flèche (26), dans laquelle le premier emplacement de charge (O1) se trouve sur la première tête de flèche (25) et le deuxième emplacement de charge (O2) se trouve sur la deuxième tête de flèche (26).

15. Produit-programme d'ordinateur comprenant des instructions, qui ont pou effet lors de l'exécution du programme que les étapes du procédé selon l'une quelconque des revendications 1 à 12 sont exécutées par l'unité de commande de la grue (10) selon l'une quelconque des revendications 13 à 14.

Fig. 1

Fig. 2

Fig. 3

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP H10279284 A